# EUROPEAN PATENT APPLICATION

(11) **EP 4 664 542 A1**
(43) Date of publication of application: **17.12.2025**
(21) Application number: 23933377.6
(22) Date of filing: 18.04.2023
(51) Int. Cl.: H01M 4/131, H01M 4/136, H01M 4/505, H01M 4/525

(54) **POSITIVE ELECTRODE ACTIVE MATERIAL COMPOSITION, POSITIVE ELECTRODE SHEET, BATTERY, AND ELECTRIC DEVICE**

(71) Applicant: Contemporary Amperex Technology Co., Limited, Ningde, Fujian 352100 (CN)
(72) Inventor: XU, Xiaofu, Ningde, Fujian 352100 (CN); SHANG, Yibo, Ningde, Fujian 352100 (CN); PAN, Jianfu, Ningde, Fujian 352100 (CN); QIN, Yiming, Ningde, Fujian 352100 (CN); PEI, Renjie, Ningde, Fujian 352100 (CN); YE, Yonghuang, Ningde, Fujian 352100 (CN); HE, Jianfu, Ningde, Fujian 352100 (CN)
(74) Representative: Gong, Jinping
(86) International application number: PCT/CN2023/088999
(87) International publication number: WO 2024/216498

(57) **Abstract**

The present application provides a positive electrode active material composition, a positive electrode plate, a battery, and an electrical apparatus. The positive electrode active material composition comprises a first positive electrode active material and a second positive electrode active material having different crystal form from the first positive electrode active material. The second positive electrode active material comprises a phosphate material, and the positive electrode active material composition satisfies: Dv10₍₁₎/Dv50₍₂₎>1, Dv50₍₁₎/Dv50₍₂₎≥1.4 and -2.0≤1 - [(ρ₂×W₂)/(ρ₁×W₁)]≤0.98. Above parameters are as defined herein, respectively.

## Description

### TECHNICAL FIELD

The present application relates to a positive electrode active material composition, a positive electrode plate, a battery, and an electrical apparatus.

### BACKGROUND

In recent years, batteries have been widely used in energy storage power systems such as hydropower, thermal power, wind power and solar power stations, as well as the fields of power tools, electric bicycles, electric motorcycles, electric vehicles, military equipment, aerospace and other fields. With the continuous expansion of battery application fields, the demand for battery energy density and service life is getting higher and higher.

### SUMMARY OF THE INVENTION

The present application provides a positive electrode active material composition, a positive electrode plate, a battery, and an electrical apparatus, which can enable the battery to have high energy density, low costs and good service life simultaneously.

In a first aspect, the present application provides a positive electrode active material composition, the positive electrode active material composition comprises a first positive electrode active material and a second positive electrode active material having different crystal form the first positive electrode active material, the second positive electrode active material comprises a phosphate material, the volume distribution particle size Dv10₍₁₎ of the first positive electrode active material and the volume distribution particle size Dv50₍₂₎ of the second positive electrode active material satisfy Dv10₍₁₎/Dv50₍₂₎> 1, the volume distribution particle size Dv50₍₁₎ of the first positive electrode active material and the volume distribution particle size Dv50₍₂₎ of the second positive electrode active material satisfy Dv50₍₁₎/Dv50₍₂₎≥1.4, the true density of the first positive electrode active material is denoted as ρ₁, the true density of the second positive electrode active material is denoted as ρ₂, both in g/cm³, and based on the total mass of the positive electrode active material composition, the mass proportion of the first positive electrode active material is denoted as W₁, the mass proportion of the second positive electrode active material is denoted as W₂, then the positive electrode active material composition satisfies -2.0≤1 - [(ρ₂×W₂)/(ρ₁×W₁)]≤0.98.

By adjusting the volume distribution particle size, true density and mass proportion of the first positive electrode active material and the second positive electrode active material in the positive electrode active material composition, the battery using the positive electrode active material composition of the present application can have high energy density, low costs and good service life simultaneously.

In any embodiment, 1<Dv10₍₁₎/Dv50₍₂₎≤16.5, optionally, 1.07≤Dv10₍₁₎/Dv50₍₂₎≤11.3. Thus, the first positive electrode active material and the second positive electrode active material can be stacked more densely, further improving the actual stacking density of the positive electrode active material composition, improving the compacted density and compacted density efficiency of the positive electrode plate, so that the battery using the positive electrode active material composition of the present application can have a higher energy density and/or a longer service life.

In any embodiment, 1.4<Dv50₍₁₎/Dv50₍₂₎≤30.0, optionally, 2.0≤Dv50₍₁₎/Dv50₍₂₎≤23.8. Thus, the first positive electrode active material and the second positive electrode active material can be stacked more densely, further improving the actual stacking density of the positive electrode active material composition, improving the compacted density and compacted density efficiency of the positive electrode plate, so that the battery using the positive electrode active material composition of the present application can have a higher energy density and/or a longer service life.

In any embodiment, -0.78≤1 - [(ρ₂×W₂)/(ρ₁×W₁)]≤0.96, optionally, -0.14≤1 - [(ρ₂×W₂)/(ρ₁×W₁)]≤0.92, more optionally, 0.67≤1 - [(ρ₂×W₂)/(ρ₁×W₁)]≤0.92. Thus, the first positive electrode active material and the second positive electrode active material can be stacked more densely, further improving the actual stacking density of the positive electrode active material composition, improving the compacted density and compacted density efficiency of the positive electrode plate, so that the battery using the positive electrode active material composition of the present application can have a higher energy density and a longer service life.

In any embodiment, W₂=ρ₂/[(β×ρ₁)+ρ₂], 0.3≤β≤30, optionally, 0.5≤β≤6.9, more optionally, 1.8≤β≤6.9. By making β within the above range, the positive electrode active material composition can have a higher actual stacking density, thereby further improving the compacted density and compacted density efficiency of the positive electrode plate, so that the battery using the positive electrode active material composition of the present application can have a higher energy density and/or a longer service life.

In any embodiment, the particle size distribution curve of the positive electrode active material composition has at least two volume distribution peaks, the peak with the smallest volume distribution particle size is denoted as peak I, the other peaks other than peak I are denoted as peak II, the volume distribution particle size corresponding to the maximum peak intensity of peak I is between 0.3µm and 2.1µm, the volume distribution particle size corresponding to the maximum peak intensity of peak II is between 3µm and 15µm, and the ratio of the integral area of peak I to the total integral area of peak II is (0.010-2.5):1, optionally (0.011-1.3):1. By making the ratio of the integral area of peak I to the total integral area of peak II in the particle size distribution curve of the positive electrode active material composition within the above range, the contribution of the first positive electrode active material to the compacted density of the positive electrode plate can be increased, and the second positive electrode active material can better fill the gaps between the particles of the first positive electrode active material, thereby making the first positive electrode active material and the second positive electrode active material more densely stacked, and in turn improving the actual stacking density of the positive electrode active material composition, improving the compacted density and compacted density efficiency of the positive electrode plate, and further making the battery using the positive electrode active material composition of the present application have a higher energy density and/or a longer service life.

In any embodiment, the particle size distribution curve of the second positive electrode active material has at least two volume distribution peaks, the peak with the smallest volume distribution particle size is denoted as peak III, the other peaks other than peak III are denoted as peak IV, the volume distribution particle size corresponding to the maximum peak intensity of peak III is between 0.3µm and 2.1µm, the volume distribution particle size corresponding to the maximum peak intensity of peak IV is between 2.1µm and 10µm, and the ratio of the integral area of peak III to the total integral area of peak IV is (0.5-20):1. By making the ratio of the integral area of peak III to the total integral area of peak IV in the particle size distribution curve of the second positive electrode active material within the above range, the second positive electrode active material can better fill the gaps between the particles of the first positive electrode active material, thereby making the first positive electrode active material and the second positive electrode active material more densely stacked, and in turn improving the actual stacking density of the positive electrode active material composition, improving the compacted density and compacted density efficiency of the positive electrode plate, and further making the battery using the positive electrode active material composition of the present application have a higher energy density and/or a longer service life.

In any embodiment, the ratio of the major axis length to the minor axis length of the first positive electrode active material is 1-2, optionally 1-1.4.

In any embodiment, the ratio of the major axis length to the minor axis length of the second positive electrode active material is 1-2, optionally 1-1.4.

In any embodiment, the volume distribution particle size Dv10₍₁₎ of the first positive electrode active material is 0.3-8µm, optionally 1.6-6.6µm.

In any embodiment, the volume distribution particle size Dv50₍₁₎ of the first positive electrode active material is 1.5-15µm, optionally 3-12µm.

In any embodiment, the volume distribution particle size Dv50₍₂₎ of the second positive electrode active material is 0.25-3µm, optionally 0.4-2µm.

When the volume distribution particle size of the first positive electrode active material and/or the second positive electrode active material is within the above range, the battery can have a higher energy density, and side reactions can be reduced, so that the battery has a longer service life.

In any embodiment, the true density ρ₁ of the first positive electrode active material is 4.40-5.15g/cm³, optionally 4.60-5.10g/cm³.

In any embodiment, the true density ρ₂ of the second positive electrode active material is 3.20-3.65g/cm³, optionally 3.30-3.60g/cm³.

In any embodiment, based on the total mass of the positive electrode active material composition, the mass proportion W₁ of the first positive electrode active material is 30%-98%, optionally 70%-90%. This enables the battery to better balance high energy density and long service life.

In any embodiment, based on the total mass of the positive electrode active material composition, the mass proportion W₂ of the second positive electrode active material is 2%-70%, optionally 10%-30%. This enables the battery to better balance high energy density and long service life.

In any embodiment, the second positive electrode active material comprises a compound represented by formula (I),

LiₐAₓMn_{1-y}B_{y}P_{1-z}C_{z}O₄₋ₙDₙ (I)

A includes one or more elements selected from group IA, group IIA, group IIIA, group IIB, group VB and group VIB; B includes one or more elements selected from group IA, group IIA, group IIIA, group IVA, group VA, group IIB, group IVB, group VB, group VIB and group VIII; C includes one or more elements selected from group IIIA, group IVA, group VA and group VIA; D includes one or more elements selected from group VIA and group VIIA; a is selected from the range of 0.85 to 1.15; x is selected from the range of 0 to 0.1; y is selected from the range of 0.001 to 1; z is selected from the range of 0 to 0.5; and n is selected from the range of 0 to 0.5.

In any embodiment, y is selected from the range of 0.001 to 0.999. By doping a specific element in a specific amount at the Mn site, and optionally at the Li site, P site and/or O site of the compound LiMnPO₄, improved rate performance can be obtained while reducing the dissolution of Mn and the doping element at the Mn site, improved cycling performance and/or high-temperature stability can be obtained, and the gram capacity and compacted density of the material are also increased.

In any embodiment, A includes one or more elements selected from Rb, Cs, Be, Ca, Sr, Ba, Ga, In, Cd, V, Ta, Cr, Zn, Al, Na, K, Mg, Nb, Mo and W, optionally includes one or more elements selected from Zn, Al, Na, K, Mg, Nb, Mo and W; and/or, B includes one or more elements selected from Rb, Cs, Be, Ca, Sr, Ba, In, Pb, Bi, Cd, Hf, Ta, Cr, Ru, Rh, Pd, Os, Ir, Pt, Zn, Al , Na, K, Mg, Mo, W, Ti, V, Zr, Fe, Ni, Co, Ga, Sn, Sb, Nb and Ge, optionally includes one or more elements selected from Zn, Al, Na, K, Mg, Mo, W, Ti, V, Zr, Fe, Ni, Co, Ga, Sn, Sb, Nb and Ge; and/or, C includes one or more elements selected from B (boron), S, Si and N; and/or, D includes one or more elements selected from S, F, Cl and Br.

In any embodiment, A includes any element selected from Zn, Al, Na, K, Mg, Nb, Mo and W, and optionally includes any element selected from Mg and Nb; and/or, B includes one or more elements selected from Ti, V, Zr, Fe, Ni, Mg, Co, Ga, Sn, Sb, Nb and Ge, optionally includes at least two elements selected from Ti, V, Zr, Fe, Ni, Mg, Co, Ga, Sn, Sb, Nb and Ge, more optionally includes at least two elements selected from Fe, Ti, V, Ni, Co and Mg, further optionally includes at least two elements selected from Fe, Ti, V, Co and Mg, and still further optionally includes Fe and one or more elements selected from Ti, V, Co and Mg; and/or, C includes any element selected from B (boron), S, Si and N, and optionally S; and/or, D includes any element selected from S, F, Cl and Br, and optionally F.

By selecting the Li-site doping element within the above range, the lattice change rate during the lithium deintercalation process can be further reduced, thereby further improving the rate performance of the battery. By selecting the Mn-site doping element within the above range, the electronic conductivity can be further improved and the lattice change rate can be further reduced, thereby improving the rate performance and gram capacity of the battery. By selecting the P-site doping element within the above range, the rate performance of the battery can be further improved. By selecting the O-site doping element within the above range, the side reactions at the interface can be further reduced and the high-temperature performance of the battery can be improved.

In any embodiment, a is selected from the range of 0.9 to 1.1, optionally selected from the range of 0.97 to 1.01; and/or, x is selected from the range of 0.001 to 0.005; and/or, y is selected from the range of 0.001 to 0.5, optionally selected from the range of 0.01 to 0.5, optionally selected from the range of 0.25 to 0.5; and/or, z is selected from the range of 0.001 to 0.5, optionally selected from the range of 0.001 to 0.1, more optionally selected from the range of 0.001 to 0.005; and/or, n is selected from the range of 0 to 0.1, optionally selected from the range of 0.001 to 0.005.

By selecting the y value within the above range, the gram capacity and rate performance of the second positive electrode active material can be further improved. By selecting the x value within the above range, the kinetic performance of the second positive electrode active material can be further improved. By selecting the z value within the above range, the rate performance of the battery can be further improved. By selecting the n value within the above range, the high-temperature performance of the battery can be further improved.

In any embodiment, x is 0, z is selected from the range of 0.001 to 0.5, and n is selected from the range of 0.001 to 0.1; or, x is selected from the range of 0.001 to 0.1, z is 0, and n is selected from the range of 0.001 to 0.1; or, x is selected from the range of 0.001 to 0.1, z is selected from the range of 0.001 to 0.5, and n is 0; or, x is 0, z is 0, and n is selected from the range of 0.001 to 0.1; or, x is 0, z is selected from the range of 0.001 to 0.5, and n is 0; or, x is selected from the range of 0.001 to 0.1, z is selected from the range of 0.001 to 0.5, and n is selected from the range of 0.001 to 0.1.

Thus, by doping a specific element in a specific amount at the Mn site and optionally at the Li site, P site and/or O site of the compound LiMnPO₄, especially doping a specific element in a specific amount at the Mn site and P site of LiMnPO₄ or at the Li site, Mn site, P site and O site of LiMnPO₄, the rate performance can be improved, the dissolution of Mn and the doping element at the Mn site can be reduced, the cycling performance and/or high-temperature stability can be improved, and the gram capacity and compacted density of the second positive electrode active material can be increased.

In any embodiment, y : z is selected from the range of 0.002 to 999, optionally selected from the range of 0.025 to 999 or the range of 0.002 to 500, and more optionally selected from the range of 0.2 to 600. As a result, the defects of the second positive electrode active material can be reduced, and the integrity of the framework structure of the second positive electrode active material can be improved, thereby effectively improving the structural stability of the second positive electrode active material and further improving the cycling stability of the battery.

In any embodiment, z : n is selected from the range of 0.002 to 500, optionally selected from the range of 0.2 to 100, and more optionally selected from the range of 0.2 to 50. As a result, the defects of the second positive electrode active material can be further reduced, and the integrity of the framework structure of the second positive electrode active material can be further improved, thereby effectively improving the structural stability of the second positive electrode active material and improving the cycling stability of the battery.

In any embodiment, A includes one or more elements selected from Zn, Al, Na, K, Mg, Nb, Mo and W; B includes one or more elements selected from Ti, V, Zr, Fe, Ni, Mg, Co, Ga, Sn, Sb, Nb and Ge; C includes one or more elements selected from B (boron), S, Si and N; D includes one or more elements selected from S, F, Cl and Br; a is selected from the range of 0.9 to 1.1, x is selected from the range of 0.001 to 0.1, y is selected from the range of 0.001 to 0.5, z is selected from the range of 0.001 to 0.1, and n is selected from the range of 0.001 to 0.1.

By simultaneously doping a specific element in a specific amount at the Li site, Mn site, P site and O site of the compound LiMnPO₄, improved rate performance can be obtained while reducing the dissolution of Mn and the doping element at the Mn site, improved cycling performance and/or high-temperature stability can be obtained, and the gram capacity and compacted density of the second positive electrode active material can also be increased.

In any embodiment, B includes one or more elements selected from Zn, Al, Na, K, Mg, Mo, W, Ti, V, Zr, Fe, Ni, Co, Ga, Sn, Sb, Nb and Ge, optionally includes one or more elements selected from Zn, Fe, Ti, V, Ni, Co and Mg; C includes one or more elements selected from B (boron), Si, N and S; a is selected from the range of 0.9 to 1.1, x is 0, y is selected from the range of 0.001 to 0.5, z is selected from the range of 0.001 to 0.1, and n is 0.

By simultaneously doping a specific element in a specific amount at the Mn site and P site of the compound LiMnPO₄, it can improve the rate performance, reduce the dissolution of Mn and the doping element at the Mn site, improve the cycling performance and/or high-temperature stability, and increase the gram capacity and compacted density of the second positive electrode active material.

In any embodiment, (1-y):y is in the range of 0.1-999, optionally in the range of 0.1-10 or in the range of 0.67-999, more optionally in the range of 1 to 10, further optionally in the range of 1 to 4, and still further optionally in the range of 1.5 to 3; and/or, a:x is in the range of 1 to 1200, optionally in the range of 9 to 1100, and more optionally in the range of 190-998. As a result, the energy density and cycling performance of the second positive electrode active material can be further improved.

In any embodiment, z: (1-z) is 1:9 to 1:999, optionally 1:499 to 1:249. As a result, the energy density and cycling performance of the second positive electrode active material can be further improved.

In any embodiment, the second positive electrode active material comprises an inner core and a shell cladding the inner core, and the inner core comprises the compound represented by formula (I); the shell comprises one or more cladding layers; and each cladding layer has ionic conductivity and/or electronic conductivity.

By providing a cladding layer with ionic conductivity and/or electronic conductivity on the surface of the inner core, a second positive electrode active material with an inner core-shell structure is provided, and applying the second positive electrode active material to the battery can improve the high-temperature cycling performance, cycling stability and high-temperature storage performance of the battery.

In any embodiment, the one or more cladding layers each independently comprise one or more selected from pyrophosphates, phosphates, carbon, doped carbon, oxides, borides and polymers.

The above materials can be used to obtain a cladding layer with ionic conductivity and/or electronic conductivity, thereby improving the high-temperature cycling performance, cycling stability and high-temperature storage performance of the battery.

In any embodiment, the shell comprises a cladding layer; and optionally, the cladding layer comprises one or more selected from pyrophosphates, phosphates, carbon, doped carbon, oxides, borides and polymers.

In any embodiment, the shell comprises a first cladding layer cladding the inner core and a second cladding layer cladding the first cladding layer; optionally, the first cladding layer and the second cladding layer each independently comprise one or more selected from pyrophosphates, phosphates, carbon, doped carbon, oxides, borides and polymers; more optionally, the first cladding layer comprises one or more selected from pyrophosphates, phosphates, oxides and borides, and the second cladding layer comprises one or more selected from carbon and doped carbon.

The use of a first cladding layer of a specific material and a second cladding layer of a specific material can further improve the rate performance and further reduce the dissolution of Mn and Mn-doping elements, thereby improving the cycling performance and/or high-temperature stability of the battery.

In any embodiment, the shell comprises a first cladding layer cladding the inner core, a second cladding layer cladding the first cladding layer and a third cladding layer cladding the second cladding layer; optionally, the first cladding layer, the second cladding layer and the third cladding layer each independently comprise one or more selected from pyrophosphates, phosphates, carbon, doped carbon, oxides, borides and polymers; more optionally, the first cladding layer comprises pyrophosphates, the second cladding layer comprises one or more selected from phosphates, oxides and borides, and the third cladding layer comprises one or more selected from carbon and doped carbon.

The use of a first cladding layer of a specific material, a second cladding layer of a specific material, and a third cladding layer of a specific material further improves the rate performance, further reduces the dissolution of Mn and Mn-doping elements, thereby improving the cycling performance and/or high-temperature stability of the battery, and further increasing the gram capacity and compacted density of the second positive electrode active material.

In any embodiment, the pyrophosphate is M_{b}(P₂O₇)_{c}; and/or, the phosphate is Xₘ(PO₄)_{q}; and/or, the doping element in the doped carbon includes one or more selected from group IIIA, group VA, group VIA and group VIIA; and/or, the oxide is M'_{d}O_{c}; and/or, the boride is ZᵥB_{w}; and/or, the polymer includes one or more selected from polysaccharides and their derivatives, polysiloxanes ;M, X and Z each independently include one or more selected from group IA, group IIA, group IIIA, group IB, group IIB, group IVB, group VB, group VIIB and group VIII; b is selected from the range of 1 to 4; c is selected from the range of 1 to 6; m is selected from the range of 1 to 2; q is selected from the range of 1 to 4; M' includes one or more elements selected from alkali metals, alkaline earth metals, transition metals, group IIIA elements, group IVA elements, lanthanides and Sb; d is greater than 0 and less than or equal to 2; e is greater than 0 and less than or equal to 5; v is selected from the range of 1 to 7; and w is selected from the range of 1 to 2.

By using the above materials as the cladding layer, the dissolution of Mn and Mn-doping elements can be further reduced, the gram capacity and compacted density of the second positive electrode active material can be further increased, and the rate performance, high-temperature cycling performance and high-temperature storage performance of the battery can be further improved.

In any embodiment, M, X and Z each independently include one or more elements selected from Li, Fe, Ni, Mg, Co, Cu, Zn, Ti, Ag, Zr, Nb, Mn and Al; and/or, the doping element in the doped carbon includes one or more elements selected from nitrogen, phosphorus, sulfur, boron and fluorine; and/or, M' includes one or more elements selected from Li, Be, B, Na, Mg, Al, Si, P, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La and Ce, optionally includes one or more elements selected from Mg, Al, Si, Zn, Zr and Sn; and/or, the polysiloxane is selected from one or more of linear polysiloxanes and cyclic polysiloxanes; and/or, the polysaccharide is selected from one or more of plant polysaccharides and marine polysaccharides.

By using the above-mentioned specific material as the cladding layer, the dissolution of Mn and Mn-doping elements can be further reduced, and the high-temperature cycling performance and high-temperature storage performance of the battery can be further improved.

In any embodiment, the second positive electrode active material comprises an inner core and a shell cladding the inner core, the inner core comprises LiₐMn_{1-y}B_{y}P_{1-z}C_{z}O₄, where a is selected from the range of 0.9 to 1.1, y is selected from the range of 0.001 to 0.5, z is selected from the range of 0.001 to 0.1, B includes one or more elements selected from Ti, V, Zr, Fe, Ni, Mg, Co, Ga, Sn, Sb, Nb and Ge, and C includes one or more elements selected from B (boron), S, Si and N; the shell comprises a first cladding layer cladding the inner core and a second cladding layer cladding the first cladding layer, the first cladding layer comprises pyrophosphate MP₂O₇ and phosphate XPO₄, where M and X each independently include one or more elements selected from Li, Fe, Ni, Mg, Co, Cu, Zn, Ti, Ag, Zr, Nb and Al; and the second cladding layer comprises carbon.

By doping lithium manganese phosphate with specific elements and cladding its surface, the dissolution of Mn during lithium (de)intercalation can be effectively reduced while promoting the migration of lithium ions, thereby improving the rate performance of the battery and enhancing the cycling performance and high-temperature performance of the battery.

In any embodiment, the second positive electrode active material comprises an inner core and a shell cladding the inner core, the inner core comprises LiaMn_{1-y}B_{y}P_{1-z}C_{z}O₄, where a is selected from the range of 0.9 to 1.1, y is selected from the range of 0.001 to 0.5, z is selected from the range of 0.001 to 0.1, B includes one or more elements selected from Ti, V, Zr, Fe, Ni, Mg, Co, Ga, Sn, Sb, Nb, and Ge, and C includes one or more elements selected from B (boron), S, Si, and N; the shell comprises a first cladding layer cladding the inner core, a second cladding layer cladding the first cladding layer, and a third cladding layer cladding the second cladding layer, the first cladding layer comprises pyrophosphate Li_{f}QP₂O₇ and/or Q_{g}(P₂O₇)ₕ, 0≤f≤2, 1≤g≤4, 1≤h≤6, the Q in pyrophosphate Li_{f}QP₂O₇ and/or Q_{g}(P₂O₇)ₕ each independently includes one or more elements selected from Fe, Ni, Mg, Co, Cu, Zn, Ti, Ag, Zr, Nb, and Al; the second cladding layer comprises crystalline phosphate XPO₄, where X includes one or more elements selected from Li, Fe, Ni, Mg, Co, Cu, Zn, Ti, Ag, Zr, Nb, and Al; the third cladding layer comprises carbon.

As a result, the second positive electrode active material can improve the gram capacity and cycling performance of the battery.

In any embodiment, the one or more cladding layers in the shell that are farthest from the inner core each independently comprise one or more selected from polysiloxanes, polysaccharides and polysaccharide derivatives. As a result, the uniformity of cladding can be improved, and the interfacial side reactions caused by high voltage can be effectively blocked, thereby improving the high-temperature cycling performance and high-temperature storage performance of the second positive electrode active material; and the cladding layer has good ionic conductivity, which helps to improve the gram capacity of the second positive electrode active material while reducing the heat generation of the battery.

In any embodiment, the polysiloxane comprises a structural unit represented by formula (i),

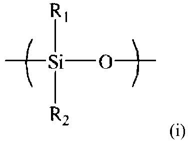

R₁ and R₂ are independently selected from H, -COOH, -OH, -SH, -CN, -SCN, amino, phosphate, carboxylate, amido, aldehyde, sulfonyl, polyether segment, C1-C20 aliphatic hydrocarbon groups, C1-C20 halogenated aliphatic hydrocarbon groups, C1-C20 heteroaliphatic hydrocarbon groups, C1-C20 halogenated heteroaliphatic hydrocarbon groups, C6-C20 aromatic hydrocarbon groups, C6-C20 halogenated aromatic hydrocarbon groups, C2-C20 heteroaromatic hydrocarbon groups and C2-C20 halogenated heteroaromatic hydrocarbon groups; optionally, R₁ and R₂ are independently selected from H, amino, phosphate, polyether segment, C1-C8 alkyl, C1-C8 halogenated alkyl, C1-C8 heteroalkyl, C1-C8 halogenated heteroalkyl, C2-C8 alkenyl and C2-C8 halogenated alkenyl.

In any embodiment, the polysiloxane further comprises an end-capping group, and the end-capping group includes one or more of the group consisting of the following functional groups: polyether, C1-C8 alkyl, C1-C8 haloalkyl, C1-C8 heteroalkyl, C1-C8 haloheteroalkyl, C2-C8 alkenyl, C2-C8 haloalkenyl, C6-C20 aromatic hydrocarbon group, C1-C8 alkoxy, C2-C8 epoxy, hydroxyl, C1-C8 hydroxyalkyl, amino, C1-C8 aminoalkyl, carboxyl, and C1-C8 carboxylalkyl.

In any embodiment, the polysiloxane includes one or more selected from polydimethylsiloxane, polydiethylsiloxane, polymethylethylsiloxane, polymethylvinylsiloxane, polyphenylmethylsiloxane, polymethylhydrogensiloxane, carboxyl functionalized polysiloxane, epoxy-terminated polysiloxane, methoxy-terminated polydimethylsiloxane, hydroxypropyl-terminated polydimethylsiloxane, polymethylchloropropylsiloxane, hydroxy-terminated polydimethylsiloxane, polymethyltrifluoropropylsiloxane, perfluorooctylmethylpolysiloxane, aminoethylaminopropylpolydimethylsiloxane, polyether-terminated polydimethylsiloxane, aminopropyl-branched polysiloxane, aminopropyl-terminated polydimethylsiloxane, phosphate-branched grafted polydimethylsiloxane, polyether-branched grafted polydimethylsiloxane, 1,3,5,7-octamethylcyclotetrasiloxane, 1,3,5,7-tetrahydro-1,3,5,7-tetramethylcyclotetrasiloxane, cyclopentapolydimethylsiloxane, 2,4,6,8-tetramethylcyclotetrasiloxane, 2,4,6,8-tetramethyl-2,4,6,8-tetravinylcyclotetrasiloxane, cyclic polymethylvinylsiloxane, hexadecamethylcyclooctasiloxane, tetradecamethylcycloheptasiloxane, and cyclic polydimethylsiloxane.

In any embodiment, the number average molecular weight of the polysiloxane, the polysaccharide and the polysaccharide derivative are each independently below 300,000, optionally 10,000 to 200,000, more optionally 20,000 to 120,000, and further optionally 400 to 80,000.

In any embodiment, the percentage mass content of polar functional groups in the polysiloxane is α, 0≤α<50%, optionally, 5%≤α≤30%.

In any embodiment, the substituents attached to the sugar units in the polysaccharide and the polysaccharide derivative each independently include one or more of the group consisting of the following functional groups: -OH, -COOH and salts thereof, -R-OH, -SO₃H and salts thereof, -R-OH, -R-SO₃H and salts thereof, sulfate, and alkoxy, where R represents alkylene, optionally represents C1-C5 alkylene; optionally, the substituents attached to the sugar units in the polysaccharide and the polysaccharide derivative each independently include one or more of the group consisting of the following functional groups: -OH, -COOH, - COOLi, -COONa, -COOK, -SO₃H, -SO₃Li, -SO₃Na, -SO₃K, -CH₂ -SO₃H, -CH₂-SO₃Li, -CH₂-SO₃Na, -CH₂-SO₃K, methoxy, and ethoxy.

In any embodiment, the polysaccharide includes one or more selected from pectin, carboxymethyl starch, hydroxypropyl starch, dextrin, cellulose ether, carboxymethyl chitosan, hydroxyethyl cellulose, carboxymethyl cellulose, carboxypropyl methyl cellulose, guar gum, sesbania gum, gum arabic, lithium alginate, sodium alginate, potassium alginate, fucoidan, agar, carrageenan, carrageenin, xanthan gum and fenugreek gum.

In any embodiment, the percentage mass content of the substituents attached to the sugar units in the polysaccharide and the polysaccharide derivative is each independently 20% to 85%, optionally 30% to 78%.

In any embodiment, the lattice mismatch between the material of the inner core and the material of the shell is less than 10%. This can improve the contact between the inner core and the shell (or cladding layer) to prevent the shell (or cladding layer) from falling off.

In any embodiment, based on the total weight of the second positive electrode active material, the content of manganese is in the range of 10wt%-35wt%, optionally in the range of 13.3wt%-33.2wt% more optionally in the range of 15wt%-30wt%, and further optionally in the range of 17wt%-20wt%; and/or, the content of phosphorus is in the range of 12wt%-25wt%, optionally in the range of 15wt%-20wt%, and more optionally in the range of 16.8wt%-19.5wt%; and/or, the weight ratio of manganese to phosphorus is in the range of 0.71-1.85, optionally 0.90-1.25, and more optionally 0.95-1.20.

Limiting the content of manganese within the above range can further improve the stability and density of the second positive electrode active material, thereby improving the battery's cycling performance, storage performance and compacted density, etc.; and can maintain a higher voltage plateau, thereby improving the battery's energy density.

Limiting the content of phosphorus within the above range can effectively reduce the influence of small polaron conductivity on the conductivity of the second positive electrode active material, and can further improve the stability of the lattice structure, thereby improving the overall stability of the second positive electrode active material.

Limiting the weight ratio of manganese to phosphorus within the above range can further reduce manganese dissolution, improve the stability and gram capacity of the second positive electrode active material, and improve the cycling performance and storage performance of the battery; it can also reduce impurity phases, enable the second positive electrode active material to maintain a higher discharge voltage plateau, and enable the battery to have a high energy density.

In any embodiment, the surface of the second positive electrode active material is cladded with one or more of carbon and doped carbon; optionally, the surface of the second positive electrode active material is cladded with carbon. Thus, the conductivity of the second positive electrode active material can be improved.

In any embodiment, the doping element in the doped carbon includes one or more selected from nitrogen, phosphorus, sulfur, boron and fluorine. It is convenient to control the performance of the doped carbon layer.

In any embodiment, the cladding amount of the shell is 0.1wt% to 6wt%, based on the weight of the inner core. The cladding amount of the cladding layer is preferably within the above range, which can fully coat the inner core and further improve the kinetic performance of the battery without sacrificing the gram capacity of the second positive electrode active material.

In any embodiment, the cladding amount of the first cladding layer is greater than 0 and less than or equal to 7wt%, optionally greater than 0 and less than or equal to 6wt%, more optionally greater than 0 and less than or equal to 5.5wt% or 4-5.6wt%, and further optionally greater than 0 and less than or equal to 2wt%, based on the weight of the inner core; and/or, the cladding amount of the second cladding layer is greater than 0 and less than or equal to 6wt%, optionally greater than 0 and less than or equal to 5.5wt%, and more optionally 2-4wt% or 3-5wt%, based on the weight of the inner core; and/or, the cladding amount of the third cladding layer is greater than 0 and less than or equal to 6wt%, optionally greater than 0 and less than or equal to 5.5wt%, and more optionally greater than 0 and less than or equal to 2wt%, based on the weight of the inner core.

In any embodiment, the shell further comprises a fourth cladding layer cladding the third cladding layer and a fifth cladding layer cladding the fourth cladding layer; and the cladding amounts of the fourth cladding layer and the fifth cladding layer are each independently 0.01wt% to 10wt%, optionally 0.05wt% to 10wt %, more optionally 0.1wt% to 5wt%, further 0.1wt% to 2wt%, based on the weight of the inner core.

The cladding amount of the cladding layer is preferably within the above range, which can fully coat the inner core and further improve the kinetic performance of the battery without sacrificing the gram capacity of the second positive electrode active material.

In any embodiment, the shell is located on 40% to 90% of the surface of the inner core, optionally 60% to 80% of the surface.

Therefore, the inner core can be fully cladded, thereby improving the kinetic performance of the battery.

In any embodiment, the thickness of the shell is 1-15 nm.

In any embodiment, the thickness of the first cladding layer is 1-10 nm, optionally 2-10 nm; and/or the thickness of the second cladding layer is 2-25 nm, optionally 2-15 nm, more optionally 3-15 nm; and/or the thickness of the third cladding layer is 2-25 nm, optionally 5-25 nm.

In any embodiment, the one or more cladding layers each independently comprise one or more selected from pyrophosphates, phosphates and oxides, and the one or more selected from the pyrophosphates, phosphates and oxides are crystalline; optionally, the crystallinity of the pyrophosphate, the phosphate and the oxide is each independently 10% to 100%, and more optionally 50% to 100%.

Pyrophosphate and phosphate with a certain crystallinity not only promote the full exertion of the ability of the pyrophosphate cladding layer to reduce manganese dissolution and the excellent lithium ion-conducting ability of the phosphate cladding layer to reduce the interfacial side reactions, but also allow for better lattice matching between the pyrophosphate cladding layer and the phosphate cladding layer, thereby enabling tight bonding between the cladding layers.

In any embodiment, in the shell, the weight ratio of pyrophosphate to phosphate and the weight ratio of pyrophosphate to oxide are each independently 1:3 to 3:1, and optionally 1:3 to 1:1.

Thus, by having pyrophosphate and phosphate in a suitable weight ratio range or pyrophosphate and oxide in a suitable weight ratio range, it can effectively reduce manganese dissolution, effectively reduce the surface impurity lithium content, and reduce interfacial side reactions, thereby improving the high-temperature storage performance and high-temperature cycling performance of the battery.

In any embodiment, the one or more cladding layers each independently comprise carbon, and the carbon is a mixture of SP2-form carbon and SP3-form carbon; optionally, the molar ratio of SP2-form carbon to SP3-form carbon in the carbon is any value within the range of 0.07-13, more optionally any value within the range of 0.1-10, and further optionally any value within the range of 2.0-3.0. By selecting the form of carbon in the carbon cladding layer, the overall electrical performance of the battery can be improved.

In any embodiment, the one or more cladding layers independently comprise doped carbon, and the mass content of the doping element in the doped carbon is 30% or less; optionally, the mass content of the doping element in the doped carbon is 20% or less. The doping elements within the above content range can not only fully improve the conductivity of the pure carbon layer, but also effectively avoid excessive surface activity caused by excessive doping of the doping elements, thereby effectively controlling the interfacial side reactions caused by excessive doping of the cladding layer.

In any embodiment, the one or more cladding layers each independently comprise doped carbon, in the doped carbon, the doping element is nitrogen element and/or sulfur element, and the mass content of the doping element in the doped carbon is 1% to 15%; or, the doping element is phosphorus element, boron element and/or fluorine element, and the mass content of the doping element in the doped carbon is 0.5% to 5%; optionally, the doping element is nitrogen, phosphorus, sulfur, boron or fluorine.

Since nitrogen atoms and sulfur atoms are closer to carbon atoms in terms of atomic radius and are not easy to destroy the carbon skeleton, when the doping amounts of nitrogen atoms and sulfur atoms are within the above relatively wide ranges, the conductivity of the doped carbon layer can be fully exerted, and lithium ion transport and lithium ion desolvation ability can be promoted.

Since the atomic radius of phosphorus atoms, boron atoms and/or fluorine atoms is different from that of carbon atoms and excessive doping can easily destroy the carbon skeleton, when the doping amounts of phosphorus atoms, boron atoms and/or fluorine atoms are within the relatively small ranges mentioned above, the conductivity of the doped carbon layer can be fully exerted, and lithium ion transport and lithium ion desolvation ability can be promoted.

In any embodiment, the one or more cladding layers each independently comprise a pyrophosphate, and the pyrophosphate has an interplanar spacing in the range of 0.293-0.470 nm, optionally 0.297-0.462 nm or 0.293-0.326 nm, and more optionally 0.300-0.310 nm, and a crystal direction (111) angle in the range of 18.00°-32.57°, optionally 18.00°-32.00° or 26.41°-32.57°, more optionally 19.211°-30.846°, and further optionally 29.00°-30.00°; and/or, the one or more cladding layers each independently comprise a phosphate, and the phosphate has an interplanar spacing in the range of 0.244-0.425 nm, optionally 0.345-0.358 nm, and a crystal direction (111) angle in the range of 20.00°-37.00°, and optionally 24.25°-26.45°.

The first cladding layer and the second cladding layer in the second positive electrode active material are both formed of crystalline substances having an interplanar spacing and an angle falling within the above-mentioned ranges. Thus, the impurity phases in the cladding layer can be effectively reduced, thereby improving the gram capacity, cycling performance and rate performance of the material.

In any embodiment, the first cladding layer or the second cladding layer comprises a phosphate.

In any embodiment, the lattice change rate of the second positive electrode active material before and after complete lithium (de)intercalation is 50% or less, optionally 9.8% or less, more optionally 8.1% or less, further optionally 7.5% or less, still further optionally 6% or less, still further optionally 4% or less, still further optionally 3.8% or less, and still further optionally 2.0-3.8%. By reducing the lattice change rate, Li ion transport can be made easier, that is, the migration ability of Li ions in the second positive electrode active material is stronger, which is beneficial to improving the rate performance of the battery.

In any embodiment, the Li/Mn antisite defect concentration of the second positive electrode active material is 5.3% or less, optionally 5.1% or less, more optionally 4% or less, further optionally 2.2% or less, still further optionally 2% or less, and still further optionally 1.5%-2.2% or 0.5% or less. By reducing the concentration of Li/Mn antisite defects, it helps to improve the gram capacity and rate performance of the second positive electrode active material.

In any embodiment, the surface oxygen valence state of the second positive electrode active material is -1.55 or less, optionally -1.82 or less, more optionally -1.88 or less, further optionally -1.90 or less or -1.98 to -1.88, still further optionally -1.98 to -1.89, and still further optionally -1.98 to -1.90. By reducing the surface oxygen valence state, the interfacial side reactions between the second positive electrode active material and the electrolyte solution can be reduced, thus improving the cycling performance and high-temperature stability of the battery.

In any embodiment, the powder compacted density P₁ of the first positive electrode active material at 30000N is 3.0 g/cm³ or more, optionally 3.2 g/cm³ or more, more optionally 3.3 g/cm³ or more, further optionally 3.4 g/cm³ or more, and still further optionally 3.5 g/cm³ or more.

In any embodiment, the powder compacted density P₂ of the second positive electrode active material at 30000N is 1.89 g/cm³ or more, optionally 1.95 g/cm³ or more, more optionally 1.98 g/cm³ or more, further optionally 2.0 g/cm³ or more, still further optionally 2.2 g/cm³ or more, still further optionally 2.2 g/cm³ or more and 2.8 g/cm³ o less, or 2.2 g/cm³ or more and 2.65 g/cm³ or less.

The higher the powder compacted density is, the greater the weight of the material per unit volume will be. Therefore, it helps to increase the compacted density of the positive electrode plate and the volumetric energy density of the battery.

In any embodiment, the first positive electrode active material comprises one or more of a layered oxide material, a lithium-rich oxide material, a spinel lithium manganese oxide material, and their respective modified compounds, and the modification method includes doping and/or surface cladding modification. By reasonably combining the above-mentioned second positive electrode active material with the first positive electrode active material, the actual stacking density of the positive electrode active material composition can be improved, the compacted density and compacted density efficiency of the positive electrode plate can be improved, and the battery can also have high energy density, low costs and good service life simultaneously.

In any embodiment, the first positive electrode active material comprises a compound represented by formula (II),

Liₐ₁A^{l}_{b1}Ni_{c1}Co_{d1}B¹_{c1}C¹_{f1}O_{2-g1}D¹_{g1} (II)

A¹ includes one or more elements selected from group IA, group IIA, group VIII, group VIB, and group IIB; B¹ includes Mn and/or Al; C¹ includes one or more elements selected from group IA, group IIA, group IIIA, group IVA, VA, group VIA, group IIB, group IIIB, group IVB, group VB, group VIB and group VIII; D¹ includes one or more elements selected from group VIA and group VIIA; al is selected from the range of 0.8 to 1.2; bl is selected from the range of 0 to 0.2; c1 is selected from the range of 0 to 1; d1 is selected from the range of 0 to 1; el is selected from the range of 0 to 1; f1 is selected from the range of 0 to 0.1; gl is selected from the range of 0 to 0.1; and c1+d1+e1+f1=1.

In any embodiment, A¹ includes one or more elements selected from Na, K, Mg, Rb, Zn, and Zr; and/or, C¹ includes one or more elements selected from Al, Mg, Ca, Na, Ti, W, Zr, Sr, Cr, Fe, Zn, Ba, Mo, V, Ce, Nb, Sb, Ta, Ge, Nb, Sc, Ba, B, S, and Y, and optionally includes one or more elements selected from Al, Ti, Zr, Nb, Sr, Sc, Sb, Y, Ba, and B; and/or, D¹ includes one or more elements selected from N, S, F, Cl and Br, and optionally includes S and/or F; and/or, a1 is selected from the range of 0.9 to 1.1; and/or, b1 is selected from the range of 0 to 0.1; and/or, c1 is selected from the range of 0.314 to 0.990, and optionally selected from the range of 0.500 to 0.990; and/or, d1 is selected from the range of 0 to 0.320, and optionally selected from the range of 0 to 0.150; and/or, el is selected from the range of 0.001 to 0.450, and optionally selected from the range of 0.005 to 0.4; and/or, f1 is selected from the range of 0.001 to 0.1, and optionally selected from the range of 0.001 to 0.05; and/or, gl is selected from the range of 0 to 0.01, and optionally selected from the range of 0.01 to 0.05.

In any embodiment, the first positive electrode active material comprises an inner core and a shell cladding the inner core, and the inner core comprises the compound represented by formula (II); the shell comprises one or more cladding layers; and each cladding layer has ionic conductivity and/or electronic conductivity.

In any embodiment, the one or more cladding layers in the shell cladding the compound represented by formula (II) independently comprise one or more selected from phosphates, pyrophosphates, carbon, doped carbon, oxides, and fast ion conductors, and optionally one or more selected from phosphates, pyrophosphates, and oxides.

In any embodiment, the shell cladding the compound represented by formula (II) comprises a cladding layer; and optionally, the cladding layer comprises one or more selected from phosphates, pyrophosphates, and oxides.

In any embodiment, the shell cladding the compound represented by formula (II) comprises a first cladding layer cladding the inner core and a second cladding layer cladding the first cladding layer; optionally, the first cladding layer and the second cladding layer each independently comprise one or more selected from phosphates, pyrophosphates, and oxides; more optionally, the first cladding layer comprises one or more selected from phosphates and oxides, and the second cladding layer comprises one or more selected from pyrophosphates and oxides.

In any embodiment, the cladding amount of the shell cladding the compound represented by formula (II) is 0.005wt% to 1wt%, optionally 0.01wt% to 0.5wt%, based on the weight of the inner core; and/or the thickness of the shell cladding the compound represented by formula (II) is 2nm to 200nm, optionally 5nm to 50nm.

In any embodiment, the first positive electrode active material comprises a compound represented by formula (III),

Li₁₊ₚ₁A²_{q1}B²ᵣ₁Oₛ₁ (III)

0.05≤p1<0.2, 0.10<q1≤0.95, 0≤r1≤0.2, and 2≤s1<3, A² includes one or more elements selected from Co, Ni, Mn and Al; and B² includes one or more elements selected from Mg, Ti, Cr, Zr, Nb, Fe, Mo, Cu, Sb, V, P and F.

In any embodiment, the first positive electrode active material comprises an inner core and a shell cladding the inner core, and the inner core comprises the compound represented by formula (III); the shell comprises one or more cladding layers; and each cladding layer has ionic conductivity and/or electronic conductivity.

In any embodiment, the one or more cladding layers in the shell cladding the compound represented by formula (III) independently comprise one or more selected from phosphates, pyrophosphates, solid electrolytes, conductive polymers, and materials capable of reversibly (de)intercalating lithium ions.

In any embodiment, the cladding amount of the shell cladding the compound represented by formula (III) is 0.1wt% to 5wt%, optionally 0.5wt% to 2wt%, based on the weight of the inner core; and/or the thickness of the shell cladding the compound represented by formula (III) is 2nm to 200nm, optionally 5nm to 50nm.

In any embodiment, the first positive electrode active material comprises a compound represented by formula (IV),

LiMnₜ₁A³₂₋ₜ₁O₄ (IV)

t1 is selected from the range of 0 to 2, and A³ includes one or more elements selected from Ni, Cr, Al, Zr, V, Ti, Mo, Ru, Mg, Nb, Ba, Si, P, W, Co, Cu and Zn.

In any embodiment, the third positive electrode active material comprises an inner core and a shell cladding the inner core, and the inner core comprises the compound represented by formula (IV); the shell comprises one or more cladding layers; and each cladding layer has ionic conductivity and/or electronic conductivity.

In any embodiment, the one or more cladding layers in the shell cladding the compound represented by formula (IV) independently comprise one or more selected from phosphates, pyrophosphates, solid electrolytes, conductive polymers, and materials capable of reversibly (de)intercalating lithium ions.

In any embodiment, the cladding amount of the shell cladding the compound represented by formula (IV) is 0.1wt% to 3wt%, optionally 0.2wt% to 1.5wt%, based on the weight of the inner core; and/or the thickness of the shell cladding the compound represented by formula (IV) is 2nm to 200nm, optionally 5nm to 50nm.

A second aspect of the present application provides a positive electrode plate comprising a positive electrode current collector and a positive electrode film layer provided on at least one surface of the positive electrode current collector, and the positive electrode film layer comprises the positive electrode active material composition of the first aspect of the present application.

In any embodiment, the content of the positive electrode active material composition in the positive electrode film layer is 90-99.5wt%, and more optionally 95-99.5wt%, based on the total weight of the positive electrode film layer.

In any embodiment, the positive electrode plate satisfies 0.23≤(h₁×N₁)/(CW/PD/10000)<1, optionally, 0.63≤(h₁×N₁)/(CW/PD/10000)≤0.87, where h₁ represents the average size of the first positive electrode active material particles along the thickness direction of the positive electrode film layer, in µm; N₁ represents the number of first positive electrode active material particles accommodated in the positive electrode film layer along the thickness direction of the positive electrode film layer; CW represents the areal density of the positive electrode film layer, in g/cm²; and PD represents the compacted density of the positive electrode film layer, in g/cm³. This allows the battery to have a long cycle life.

In any embodiment, along the thickness direction of the positive electrode film layer, the average size h₁ of the first positive electrode active material particles is 0.5-20µm, and optionally 2.8-9.2µm.

In any embodiment, along the thickness direction of the positive electrode film layer, the number N₁ of the first positive electrode active material particles accommodated in the positive electrode film layer is 5-25, and optionally 6-20.

In any embodiment, the areal density CW of the positive electrode film layer is 0.01-0.05g/cm², optionally 0.015-0.035g/cm².

In any embodiment, the compacted density PD of the positive electrode film layer is 1.8-3.6g/cm³, optionally 2.0-3.4g/cm³.

In any embodiment, the positive electrode plate also satisfies 0.5≤α₁+(PD/ρ₁)≤1.5, where α₁ represents the porosity of the positive electrode film layer. This allows the battery to have a long cycle life and/or a high energy density.

In any embodiment, the porosity α₁ of the positive electrode film layer is 0.28-0.50, optionally 0.30-0.39.

In any embodiment, based on the total mass of the positive electrode active material composition, the mass proportion of the first positive electrode active material is denoted as W₁, the mass proportion of the second positive electrode active material is denoted as W₂, the powder compacted density of the first positive electrode active material at 30000N is denoted as P₁, and the powder compacted density of the second positive electrode active material at 30000N is denoted as P₂, both in g/cm³, then PD/[(P₁×W₁)+(P₂×W₂)] is 89% or more, and optionally 92% or more.

A third aspect of the present application provides a battery comprising the positive electrode active material composition of the first aspect or the positive electrode plate of the second aspect of the present application.

A fourth aspect of the present application provides an electrical apparatus comprising the battery of the third aspect of the present application.

The electrical apparatus of the present application comprises the battery provided by the present application, and thus has at least the same advantages as the battery.

### DESCRIPTION OF DRAWINGS

To more clearly illustrate the technical solutions of embodiments of the present application, the following provides a brief description of the accompanying drawings used in the embodiments of the present application. It is evident that the accompanying drawings described below are only some embodiments of the present application. For those of ordinary skill in the art, other accompanying drawings can also be obtained based on the drawings without any creative effort.
FIG. 1 is a schematic view of an embodiment of a battery cell of the present application.
FIG. 2 is a schematic exploded view of an embodiment of a battery cell according to the present application.
FIG. 3 is a schematic view of an embodiment of a battery module of the present application.
FIG. 4 is a schematic view of an embodiment of a battery pack of the present application.
FIG. 5 is a schematic exploded view of the embodiment of the battery pack as shown in FIG. 4.
FIG. 6 is a schematic view of an embodiment of an electrical apparatus using the battery of the present application as a power supply.

The accompanying drawings may not be drawn according to an actual scale. Description of reference numerals: 1 Battery pack, 2 Upper box, 3 Lower box, 4 Battery module, 5 Battery cell, 51 Case; 52 Electrode assembly; and 53 Cover plate.

### DETAILED DESCRIPTION

The following is to make appropriate reference to the accompanying drawings to describe in detail the embodiments of the positive electrode active material composition, positive electrode plate, battery and electrical apparatus of the present application. However, there may be cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specifically stated, all embodiments and optional embodiments of the present application may be combined with each other to form new technical solutions, and such technical solutions should be considered as being included in the disclosure of the present application.

Unless otherwise specifically stated, all technical features and optional technical features of the present application may be combined with each other to form new technical solutions, and such technical solutions should be considered as being included in the disclosure of the present application.

Unless otherwise specifically stated, all steps in the present application may be performed sequentially or randomly, and are preferably performed sequentially. For example, the method includes steps (a) and (b), indicating that the method may include steps (a) and (b) performed sequentially, or may include steps (b) and (a) performed sequentially. For example, the reference to the method may further comprise step (c), meaning that step (c) may be added to the method in any order, for example, the method may comprise steps (a), (b) and (c), or may comprise steps (a), (c) and (b), or may comprise steps (c), (a) and (b), and so on.

Unless otherwise specifically stated, the "including" and "comprising" mentioned in the present application mean open-ended, or may be closed-ended. For example, the terms "including" and "comprising" may indicate that other components not listed may be further included or comprised, or only the listed components may be included or comprised.

Unless otherwise specifically stated, in the present application, the term "or" is inclusive. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

Unless otherwise particularly stated, in the present application, the terms "first", "second", "third", "fourth" and "fifth" and the like are used to distinguish different objects, not to describe a particular sequence or primary-secondary relationship.

In the present application, the terms "a plurality of" and "multiple" refer to two or more.

At various places in this specification, substituents of compounds are disclosed in groups or in ranges. It is expressly contemplated that such descriptions include each individual sub-combination of members of these groups and ranges. For example, the term "C1-C6 alkyl" is expressly intended to disclose individually C1, C2, C3, C4, C5, C6, C1-C6, C1-C5, C1-C4, C1-C3, C1-C2, C2-C6, C2-C5, C2-C4, C2-C3, C3-C6, C3-C5, C3-C4, C4-C6, C4-C5, and C5-C6 alkyl.

Unless otherwise specified, the terms used in the present application have well-known meanings as commonly understood by those skilled in the art.

Unless otherwise stated, numerical values of parameters mentioned in the present application may be measured using various testing methods commonly used in the art. For example, the numerical values may be measured according to testing methods given in the examples of the present application. Unless otherwise stated, all parameters were tested at 25°C.

Unless otherwise specified, all ratio parameters involved in the present application are compared in the same unit. For example, the ratio of volume distribution particle size of A to B is 1:1, and the units of the volume distribution particle sizes of A and B are the same.

In the present application, the term "compacted density efficiency" refers to the ratio of the compacted density of the film layer to the theoretical powder compacted density of the active material.

In the present application, the first positive electrode active material, the second positive electrode active material, and the third positive electrode active material may be tested for element content using inductively coupled plasma emission spectroscopy (ICP).

The battery mentioned in the embodiments of the present application is a single physical module including one or a plurality of battery cells to provide higher voltage and capacity. For example, the battery mentioned in the present application may include a battery cell, a battery module or a battery pack.

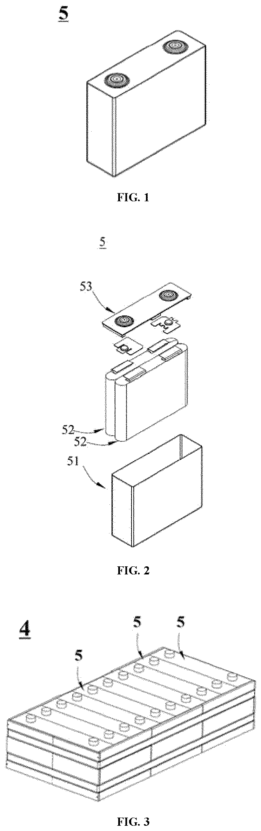

The battery cell is the smallest unit that makes up a battery, which is capable of achieving the charging and discharging functions alone. The battery cell may be in a cylindrical shape, a flat shape, a cuboid shape or another shape, which is not limited in the embodiments of the present application. For example, FIG. 1 is a battery cell 5 in a cuboid structure as an example.

When there are a plurality of battery cells, the plurality of battery cells are connected by series connection, or parallel connection, or parallel-series connection through a bus component. In some embodiments, the battery may be a battery module; when there are a plurality of battery cells, the plurality of battery cells are arranged and fixed to form a battery module. In some embodiments, the battery may be a battery pack. The battery pack includes a box and a battery cell. The battery cell or the battery module is accommodated in the box. In some embodiments, the box may be a part of a vehicle chassis structure. For example, a part of the box may become at least a part of a vehicle floor, or a part of the box may become at least a part of a cross beam and a longitudinal beam of a vehicle.

In some embodiments, the battery may be an energy storage apparatus. The energy storage apparatus includes an energy storage container, an energy storage electric cabinet, etc.

The battery cells mentioned in the embodiments of the present application include lithium ion primary battery cells, lithium ion secondary battery cells, lithium metal battery cells, negative electrode-free lithium metal battery cells, etc., which is not limited in the embodiments of the present application.

The battery cell generally comprises an electrode assembly. The electrode assembly generally includes a positive electrode plate, a negative electrode plate, and a separator between the positive electrode plate and the negative electrode plate. The electrode assembly may be a wound structure or a stacked structure, which is not limited in the embodiments of the present application.

The battery cell may further comprise an outer package which may be used to encapsulate the aforementioned electrode assembly and electrolyte solution. The outer package may be a hard case, such as a hard plastic case, an aluminum case, or a steel case. The outer package can also be a soft package, such as a pouch-type soft package. The material of the soft package may be plastic, such as one or more of polypropylene (PP), polybutylene terephthalate (PBT), and polybutylene succinate (PBS).

In some embodiments, as shown in FIG. 2, the outer package may include a case 51 and a cover plate 53. The case 51 may include a bottom plate and side plates connected to the bottom plate, which define an accommodating cavity. The housing 51 has an opening in communication with the accommodating cavity, and the cover plate 53 is configured to cover an opening to close the accommodating cavity. The electrode assembly 52 is encapsulated in the accommodating cavity. The number of the electrode assembly 52 included in the battery cell 5 can be one or more, and can be adjusted according to requirements.

In some embodiments, the battery cell can be assembled into a battery module, the number of battery cells included in the battery module can be multiple, and the specific number may be adjusted according to the application and capacity of the battery module. FIG. 3 is a schematic view of a battery module 4 as an example. As shown in FIG. 3, in the battery module 4, a plurality of battery cells 5 can be sequentially arranged in the length direction of the battery module 4. Of course, any other arrangements are also possible. The plurality of battery cells 5 may further be fixed by fasteners.

Optionally, the battery module 4 may further include a shell having an accommodating space, and the plurality of battery cells 5 are accommodated in the accommodating space.

In some embodiments, the aforementioned battery modules may further be assembled into the battery pack, and the number of battery modules included in the battery pack may be adjusted according to the application and capacity of the battery pack.

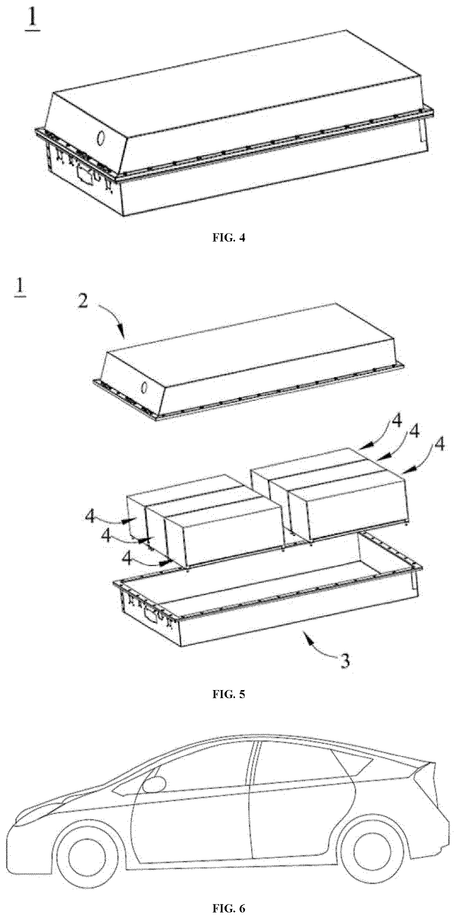

FIG. 4 and FIG. 5 are schematic views of a battery pack 1 as an example. As shown in FIG. 4 and FIG. 5, the battery pack 1 may include a box and a plurality of battery modules 4 provided in the box. The box includes an upper box 2 and a lower box 3, where the upper box 2 is configured to cover the lower box 3 to form an enclosed space for accommodating the battery modules 4. The plurality of battery modules 4 may be arranged in the box in any manner.

The positive electrode plate comprises a positive electrode active material. As an important component of the battery, the performance of the positive electrode active material is an important factor restricting the battery's energy density and service life. At present, there is no positive electrode active material that can simultaneously meet the requirements of low costs, high capacity and few side reactions.

In view of this, the inventors propose a positive electrode active material composition, which can make the battery have high energy density, low costs and good service life simultaneously.

### [Positive electrode active material composition]

The positive electrode active material composition provided in the embodiments of the present application comprises a first positive electrode active material and a second positive electrode active material having different crystal form from the first positive electrode active material, and the second positive electrode active material comprises a phosphate material.

The volume distribution particle size Dv10₍₁₎ of the first positive electrode active material and the volume distribution particle size Dv50₍₂₎ of the second positive electrode active material satisfy Dv10₍₁₎/Dv50₍₂₎> 1, and the volume distribution particle size Dv50₍₁₎ of the first positive electrode active material and the volume distribution particle size Dv50₍₂₎ of the second positive electrode active material satisfy Dv50₍₁₎/Dv50₍₂₎≥1.4.

The true density of the first positive electrode active material is denoted as ρ₁, and the true density of the second positive electrode active material is denoted as ρ₂, both in g/cm³, and based on the total mass of the positive electrode active material composition, the mass proportion of the first positive electrode active material is denoted as W₁, the mass proportion of the second positive electrode active material is denoted as W₂, then the positive electrode active material composition satisfies -2.0≤1 - [(ρ₂×W₂)/(ρ₁×W₁)]≤0.98.

The second positive electrode active material comprises a phosphate, which is usually in an olivine structure and has generally low production costs. However, the compacted density of the second positive electrode active material is relatively low, which makes it difficult to meet the requirements of high energy density batteries. Using it in combination with another positive electrode active material with a high compacted density can improve the compacted density of the positive electrode plate. However, simply mixing the two positive electrode active materials usually does not improve the compacted density and compacted density efficiency of the positive electrode plate, making it difficult to fully utilize the capacity of the battery and also affecting the battery's service life.

The inventors have studied and found that by adjusting the volume distribution particle size, true density and mass proportion of the first positive electrode active material and the second positive electrode active material in the positive electrode active material composition, the battery using the positive electrode active material composition of the present application can have high energy density, low costs and good service life simultaneously.

By adjusting the volume distribution particle size Dv10₍₁₎ of the first positive electrode active material and the volume distribution particle size Dv50₍₂₎ of the second positive electrode active material to satisfy Dv10₍₁₎/Dv50₍₂₎> 1, the second positive electrode active material can fill the gaps between the particles of the first positive electrode active material, thereby facilitating denser stacking of the first positive electrode active material and the second positive electrode active material.

By adjusting the volume distribution particle size Dv50₍₁₎ of the first positive electrode active material and the volume distribution particle size Dv50₍₂₎ of the second positive electrode active material to satisfy Dv50₍₁₎/Dv50₍₂₎≥1.4, it helps the first positive electrode active material and the second positive electrode active material to be stacked more densely.

The inventors have also studied and found that simply adjusting the volume distribution particle size of the first positive electrode active material and the second positive electrode active material cannot make the positive electrode plate have a high compacted density. On the basis of satisfying the above conditions, by further adjusting the true density ρ₁ and mass proportion W₁ of the first positive electrode active material and the true density ρ₂ and mass proportion W₂ of the second positive electrode active material to satisfy -2.0≤1 - [(ρ₂×W₂)/(ρ₁×W₁)]≤0.98, the first positive electrode active material and the second positive electrode active material can be stacked more densely, thereby improving the actual stacking density of the positive electrode active material composition, improving the compacted density and compacted density efficiency of the positive electrode plate, and thus enabling the battery using the positive electrode active material composition of the present application to have a high energy density and a long service life.

The true density ρ₁ of the first positive electrode active material is related to parameters such as the type, elemental composition, crystal form, particle morphology, structure (such as porosity, optional cladding layer type, optional cladding layer thickness) of the first positive electrode active material. By adjusting one or more of the above parameters, the first positive electrode active material can have a suitable true density ρ₁.

The true density ρ₂ of the second positive electrode active material is related to parameters such as the type, elemental composition, crystal form, particle morphology, structure (such as porosity, optional cladding layer type, optional cladding layer thickness, etc.) of the second positive electrode active material. By adjusting one or more of the above parameters, the second positive electrode active material can have a suitable true density ρ₂.

The true density ρ₁ of the first positive electrode active material and the true density ρ₂ of the second positive electrode active material have meanings well known in the art and can be measured using methods known in the art. For example, it can be determined by referring to GB/T1033.1, GB/T6155, GB/T23561, YB/T5300, JB/T7984.3, GB/T 1713, GB/T8929, GB/T1713, GB/T208, GB/T5071, QB/T1010, GB/T9966, GB/T18856, GB/T24203, GB/T8330 or SL-237.

The volume distribution particle sizes Dv10 and Dv50 of materials (such as the first positive electrode active material and the second positive electrode active material) have meanings well known in the art, which respectively represent the corresponding particle sizes when the cumulative volume distribution percentage of the material reaches 10% and 50%, and can be determined by instruments and methods known in the art. For example, they can be tested with reference to GB/T 19077-2016 using a laser particle size analyzer. The test instrument can be a Mastersizer 3000 laser particle size analyzer from Malvern Instruments Ltd., UK. Deionized water can be used as the solvent during the test, and the material can be ultrasonically treated for 5 min before the test.

The different crystal forms of the first positive electrode active material and the second positive electrode active material mean that the first positive electrode active material and the second positive electrode active material have different crystal systems.

In some embodiments, 1<Dv10₍₁₎/Dv50₍₂₎≤16.5, optionally, 1.07≤Dv10₍₁₎/Dv50₍₂₎≤11.3, 1.07≤Dv10₍₁₎/Dv50₍₂₎≤9.0, 1.07≤Dv10₍₁₎/Dv50₍₂₎≤8.0, 1.07≤Dv10₍₁₎Dv50₍₂₎≤7.0. Thus, the first positive electrode active material and the second positive electrode active material can be stacked more densely, further improving the actual stacking density of the positive electrode active material composition, improving the compacted density and compacted density efficiency of the positive electrode plate, so that the battery using the positive electrode active material composition of the present application can have a higher energy density and/or a longer service life.

As an example, Dv10₍₁₎Dv50₍₂₎ can be 1.02, 1.05, 1.07, 1.1, 1.2, 1.4, 1.8, 2.0, 2.5, 2.7, 3.0, 4.0, 5.0, 6.0, 7.0, 8.0, 9.0, 10.0, 11.3, 14.0, 16.5, or any range of any of the above values.

In some embodiments, 1.4<Dv50₍₁₎/Dv50₍₂₎≤30.0, optionally, 2.0≤Dv50₍₁₎/Dv50₍₂₎≤23.8, 2.0≤Dv50₍₁₎/Dv50₍₂₎≤9.8. Thus, the first positive electrode active material and the second positive electrode active material can be stacked more densely, further improving the actual stacking density of the positive electrode active material composition, improving the compacted density and compacted density efficiency of the positive electrode plate, so that the battery using the positive electrode active material composition of the present application can have a higher energy density and/or a longer service life.

As an example, Dv50₍₁₎/Dv50₍₂₎ can be 1.5, 1.8, 2.0, 2.3, 2.5, 3.0, 4.0, 5.7, 7.0, 8.5, 9.0, 9.8, 11.0, 12.0, 14.0, 16.0, 18.0, 20.0, 22.0, 23.8, 26.0, 28.0, 30.0, or any range of any of the above values.

In some embodiments, -0.78≤1 - [(ρ₂×W₂)/(ρ₁×W₁)]≤0.96, optionally -0.14≤1 - [(ρ₂×W₂)/(ρ₁×W₁)]≤0.92, 0.24≤1 - [(ρ₂×W₂)/(ρ₁×W₁)]≤0.92, 0.49≤1 - [(ρ₂×W₂)/(ρ₁×W₁)]≤0.92, 0.67≤1 - [(ρ₂×W₂)/(ρ₁×W₁)]≤0.92. Thus, the first positive electrode active material and the second positive electrode active material can be stacked more densely, further improving the actual stacking density of the positive electrode active material composition, improving the compacted density and compacted density efficiency of the positive electrode plate, so that the battery using the positive electrode active material composition of the present application can have a higher energy density and a longer service life.

As an example, 1 - [(ρ₂×W₂)/(ρ₁×W₁)] can be -1.5, -1.0, -0.78, -0.50, -0.25, -0.14, 0, 0.1, 0.2, 0.3, 0.4, 0.5, 0.6, 0.67, 0.80, 0.87, 0.9, 0.92, 0.94, 0.96, 0.98, or any range of the above values.

In some embodiments, the ratio of the major axis length to the minor axis length of the first positive electrode active material is 1-2, optionally 1-1.4.

In some embodiments, the ratio of the major axis length to the minor axis length of the second positive electrode active material is 1-2, optionally 1-1.4.

The first positive electrode active material and the second positive electrode active material may have regular morphology, such as spherical or quasi-spherical, or may have irregular morphology.

In some embodiments, the volume distribution particle size Dv10₍₁₎ of the first positive electrode active material is 0.3-8µm, optionally 1.6-6.6µm.

In some embodiments, the volume distribution particle size Dv50₍₁₎ of the first positive electrode active material is 1.5-15µm, optionally 3-12µm.

In some embodiments, the volume distribution particle size Dv50₍₂₎ of the second positive electrode active material is 0.25-3µm, optionally 0.4-2µm.

When the volume distribution particle size of the first positive electrode active material and/or the second positive electrode active material is within the above range, the battery can have a higher energy density, and side reactions can be reduced, so that the battery has a longer service life.

In some embodiments, the true density ρ₁ of the first positive electrode active material is 4.40-5.15g/cm³, optionally 4.60-5.10g/cm³.

In some embodiments, the true density ρ₂ of the second positive electrode active material is 3.20-3.65g/cm³, optionally 3.30-3.60g/cm³.

In some embodiments, based on the total mass of the positive electrode active material composition, the mass proportion W₁ of the first positive electrode active material is 30%-98%, optionally 50%-90%, 70%-90%. This enables the battery to better balance high energy density and long service life.

In some embodiments, based on the total mass of the positive electrode active material composition, the mass proportion W₂ of the second positive electrode active material is 2%-70%, optionally 10%-50%, 10%-30%. This enables the battery to better balance high energy density and long service life.

In some embodiments, the powder compacted density P₁ of the first positive electrode active material at 30000N is 3.0 g/cm³ or more, optionally 3.2g/cm³ or more, more optionally 3.3 g/cm³ or more, further optionally 3.4 g/cm³ or more, and still further optionally 3.5 g/cm³ or more.

In some embodiments, the powder compacted density P₂ of the second positive electrode active material at 30000N is 1.89 g/cm³ or more, optionally 1.95g/cm³ or more, more optionally 1.98 g/cm³ or more, further optionally 2.0 g/cm³ or more, still further optionally 2.2 g/cm³ or more, still further optionally 2.2 g/cm³ or more and 2.8 g/cm³ o less, or 2.2 g/cm³ or more and 2.65 g/cm³ or less.

The higher the powder compacted density is, the greater the weight of the material per unit volume will be. Therefore, it helps to increase the compacted density of the positive electrode plate and the volumetric energy density of the battery. The powder compacted density can be measured according to GB/T 24533-2009.

In some embodiments, W₂=ρ₂/[(β×ρ₁)+ρ₂], 0.3≤β≤30, optionally, 0.5≤β≤6.9, 0.8≤β≤6.9, 1.1≤β≤6.9, 1.8≤β≤6.9. By making β within the above range, the positive electrode active material composition can have a higher actual stacking density, thereby further improving the compacted density and compacted density efficiency of the positive electrode plate, so that the battery using the positive electrode active material composition of the present application can have a higher energy density and/or a longer service life.

In some embodiments, the particle size distribution curve of the positive electrode active material composition has at least two volume distribution peaks, the peak with the smallest volume distribution particle size is denoted as peak I, and the other peaks other than peak I are denoted as peak II. Peak II can have one or more peaks.

The volume distribution particle size corresponding to the maximum peak intensity of peak I is between 0.3µm and 2.1µm, the volume distribution particle size corresponding to the maximum peak intensity of peak II is between 3µm and 15µm, and the ratio of the integral area of peak I to the total integral area of peak II is (0.010-2.5):1, optionally (0.011-1.3):1. The total integral area of peak II refers to the sum of the integral areas of a plurality of peaks in the peak II.

By making the ratio of the integral area of peak I to the total integral area of peak II in the particle size distribution curve of the positive electrode active material composition within the above range, the contribution of the first positive electrode active material to the compacted density of the positive electrode plate can be increased, and the second positive electrode active material can better fill the gaps between the particles of the first positive electrode active material, thereby making the first positive electrode active material and the second positive electrode active material more densely stacked, and in turn improving the actual stacking density of the positive electrode active material composition, improving the compacted density and compacted density efficiency of the positive electrode plate, and further making the battery using the positive electrode active material composition of the present application have a higher energy density and/or a longer service life.

The particle size distribution curve of the positive electrode active material composition can be measured with reference to GB/T 19077-2016 using a laser particle size analyzer. The test instrument can be a Mastersizer 3000 laser particle size analyzer from Malvern Instruments Ltd., UK. Deionized water can be used as the solvent during the test, and the material can be ultrasonically treated for 5 min before the test.

In some embodiments, the particle size distribution curve of the second positive electrode active material has at least two volume distribution peaks, the peak with the smallest volume distribution particle size is denoted as peak III, and the other peaks other than peak III are denoted as peak IV.

The volume distribution particle size corresponding to the maximum peak intensity of peak III is between 0.3µm and 2.1µm, the volume distribution particle size corresponding to the maximum peak intensity of peak IV is between 2.1µm and 10µm, and the ratio of the integral area of peak III to the total integral area of peak IV is (0.5-20):1.

By making the ratio of the integral area of peak III to the total integral area of peak IV in the particle size distribution curve of the second positive electrode active material within the above range, the second positive electrode active material can better fill the gaps between the particles of the first positive electrode active material, thereby making the first positive electrode active material and the second positive electrode active material more densely stacked, and in turn improving the actual stacking density of the positive electrode active material composition, improving the compacted density and compacted density efficiency of the positive electrode plate, and further making the battery using the positive electrode active material composition of the present application have a higher energy density and/or a longer service life.

The particle size distribution curve of the second positive electrode active material can be measured with reference to GB/T 19077-2016 using a laser particle size analyzer. The test instrument can be a Mastersizer 3000 laser particle size analyzer from Malvern Instruments Ltd., UK. Deionized water can be used as the solvent during the test, and the material can be ultrasonically treated for 5 min before the test.

In some embodiments, the second positive electrode active material comprises a compound represented by formula (I),

LiₐAₓMn_{1-y}B_{y}P_{1.-z}C₂O₄₋ₙDₙ (I)

A includes one or more elements selected from group IA, group IIA, group IIIA, group IIB, group VB and group VIB; B includes one or more elements selected from group IA, group IIA, group IIIA, group IVA, group VA, group IIB, group IVB, group VB, group VIB and group VIII; C includes one or more elements selected from group IIIA, group IVA, group VA and group VIA; D includes one or more elements selected from group VIA and group VIIA; a is selected from the range of 0.85 to 1.15; x is selected from the range of 0 to 0.1; y is selected from the range of 0.001 to 1; z is selected from the range of 0 to 0.5; and n is selected from the range of 0 to 0.5.

Unless otherwise specified, in the chemical formula, when A is two or more elements, the definition for the value range of y is not only a definition for the stoichiometric number of each element as A, but also a definition for the sum of the stoichiometric numbers of various elements. For example, when A is two or more elements A1, A2...An, the respective stoichiometric numbers x1, x2...xn of the A1, A2...An must each fall within the numerical range for x defined in the present application, and the sum of x1, x2, ...xn must also fall within the numerical range.

Similarly, in the case that B, C, D, M, M', X, Z, P, Q, A¹, B¹, C¹, D¹, A², B², A³, etc. mentioned in the embodiments of the present application are more than two elements, the definition of the numerical range of their stoichiometric numbers in the present application also has the above meaning.

In some embodiments, y is selected from the range of 0.001 to 0.999.

The second positive electrode active material is obtained by doping elements in the compound LiMnPO₄, wherein A, B, C and D are elements doped at the Li site, Mn site, P site and O site of the compound LiMnPO₄, respectively. Without wishing to be bound by theory, it is currently believed that the performance improvement of lithium manganese phosphate is related to reducing the lattice change rate of lithium manganese phosphate during lithium (de)intercalation and reducing the surface activity. Reducing the lattice change rate can reduce the difference in lattice constants between the two phases at the grain boundary, reduce interfacial stress, and enhance the Li⁺ transport capacity at the interface, thereby improving the rate performance of the second positive electrode active material. However, high surface activity can easily lead to serious side reactions at the interface, exacerbating gas production, electrolyte solution consumption and interface damage, thus affecting the battery's cycling performance. The lattice change rate can be reduced by doping at the Li site and/or Mn site. Mn doping can also effectively reduce surface activity, thereby reducing Mn dissolution and interfacial side reactions between the second cathode active material and the electrolyte solution. P-site doping makes the change rate of Mn-O bond length faster and reduces the migration potential barrier of small polarons in the material, which helps to improve electronic conductivity. O-site doping has a good effect on reducing interfacial side reactions. Doping at P and/or O sites also affects the Mn dissolution and kinetic performance of antisite defects. Therefore, doping reduces the antisite defect concentration in the material, improves the kinetic performance and gram capacity of the material, and can also change the morphology of the particles, thereby increasing the compacted density. The inventor unexpectedly discovered that by doping a specific element in a specific amount at the Mn site, and optionally at the Li site, P site and/or O site of the compound LiMnPO₄, improved rate performance can be obtained while reducing the dissolution of Mn and the doping element at the Mn site, improved cycling performance and/or high-temperature stability can be obtained, and the gram capacity and compacted density of the material are also increased.
In some embodiments, A includes one or more elements selected from Rb, Cs, Be, Ca, Sr, Ba, Ga, In, Cd, V, Ta, Cr, Zn, Al, Na, K, Mg, Nb, Mo and W, and optionally includes one or more elements selected from Zn, Al, Na, K, Mg, Nb, Mo and W; and/or,
B includes one or more elements selected from Rb, Cs, Be, Ca, Sr, Ba, In, Pb, Bi, Cd, Hf, Ta, Cr, Ru, Rh, Pd, Os, Ir, Pt, Zn, Al, Na, K, Mg, Mo, W, Ti, V, Zr, Fe, Ni, Co, Ga, Sn, Sb, Nb and Ge, and optionally includes one or more elements selected from Zn, Al, Na, K, Mg, Mo, W, Ti, V, Zr, Fe, Ni, Co, Ga, Sn, Sb, Nb and Ge; and/or,
C includes one or more elements selected from B (boron), S, Si and N; and/or,
D includes one or more elements selected from S, F, Cl, and Br.
In some embodiments, A includes any element selected from Zn, Al, Na, K, Mg, Nb, Mo and W, and optionally includes any element selected from Mg and Nb; and/or,
B includes one or more elements selected from Ti, V, Zr, Fe, Ni, Mg, Co, Ga, Sn, Sb, Nb and Ge, optionally includes at least two elements selected from Ti, V, Zr, Fe, Ni, Mg, Co, Ga, Sn, Sb, Nb and Ge, more optionally includes at least two elements selected from Fe, Ti, V, Ni, Co and Mg, further optionally includes at least two elements selected from Fe, Ti, V, Co and Mg, and still further optionally includes Fe and one or more elements selected from Ti, V, Co and Mg; and/or,
C includes any element selected from B (boron), S, Si and N, and optionally S; and/or,
D includes any element selected from S, F, Cl and Br, and optionally F.

By selecting the Li-site doping element within the above range, the lattice change rate during the lithium deintercalation process can be further reduced, thereby further improving the rate performance of the battery. By selecting the Mn-site doping element within the above range, the electronic conductivity can be further improved and the lattice change rate can be further reduced, thereby improving the rate performance and gram capacity of the battery. By selecting the P-site doping element within the above range, the rate performance of the battery can be further improved. By selecting the O-site doping element within the above range, the side reactions at the interface can be further reduced and the high-temperature performance of the battery can be improved.
In some embodiments, a is selected from the range of 0.9 to 1.1, optionally selected from the range of 0.97 to 1.01; and/or,
x is selected from the range of 0.001 to 0.005; and/or,
y is selected from the range of 0.001 to 0.5, optionally selected from the range of 0.01 to 0.5, optionally selected from the range of 0.25 to 0.5; and/or,
z is selected from the range of 0.001 to 0.5, optionally selected from the range of 0.001 to 0.1, and more optionally selected from the range of 0.001 to 0.005; and/or,
n is selected from the range of 0 to 0.1, optionally selected from the range of 0.001 to 0.005.

By selecting the y value within the above range, the gram capacity and rate performance of the second positive electrode active material can be further improved. By selecting the x value within the above range, the kinetic performance of the second positive electrode active material can be further improved. By selecting the z value within the above range, the rate performance of the battery can be further improved. By selecting the n value within the above range, the high-temperature performance of the battery can be further improved.

In some embodiments, y is selected from the range of 0.001 to 0.999, x is 0, z is selected from the range of 0.001 to 0.5, and n is selected from the range of 0.001 to 0.1; or, x is selected from the range of 0.001 to 0.1, z is 0, and n is selected from the range of 0.001 to 0.1; or, x is selected from the range of 0.001 to 0.1, z is selected from the range of 0.001 to 0.5, and n is 0; or, x is 0, z is 0, and n is selected from the range of 0.001 to 0.1; or, x is 0, z is selected from the range of 0.001 to 0.5, and n is 0; or, x is selected from the range of 0.001 to 0.1, z is selected from the range of 0.001 to 0.5, and n is selected from the range of 0.001 to 0.1.

Thus, by doping a specific element in a specific amount at the Mn site and optionally at the Li site, P site and/or O site of the compound LiMnPO₄, especially doping a specific element in a specific amount at the Mn site and P site of LiMnPO₄ or at the Li site, Mn site, P site and O site of LiMnPO₄, the rate performance can be improved, the dissolution of Mn and the doping element at the Mn site can be reduced, the cycling performance and/or high-temperature stability can be improved, and the gram capacity and compacted density of the second positive electrode active material can be increased.

In some embodiments, y:z is selected from the range of 0.002 to 999, and optionally selected from the range of 0.025 to 999 or the range of 0.002 to 500, and more optionally selected from the range of 0.2 to 600, for example, 0.2, 0.25, 1, 2, 3, 4, 5, 6, 8, 10, 12, 13, 15, 17, 20, 70, 80, 84, 67, 91, 100, 134, 150, 182, 200, 250, 300, 320, 350, 400, 420, 450, 500, 600, 999 or a range consisting of any two of the above values. As a result, the defects of the second positive electrode active material can be reduced, and the integrity of the framework structure of the second positive electrode active material can be improved, thereby effectively improving the structural stability of the second positive electrode active material and further improving the cycling stability of the battery.

In some embodiments, z:n is selected from the range of 0.002 to 500, optionally selected from the range of 0.2 to 100, and more optionally selected from the range of 0.2 to 50, for example 0.2, 0.8, 1, 1.25, 4, 5, 50 or a range consisting of any two of the above values. As a result, the defects of the second positive electrode active material can be further reduced, and the integrity of the framework structure of the second positive electrode active material can be further improved, thereby effectively improving the structural stability of the second positive electrode active material and improving the cycling stability of the battery.

In some embodiments, (1-y): y is in the range of 0.1-999, optionally in the range of 0.1-10 or in the range of 0.67-999, more optionally in the range of 1 to 10, further optionally in the range of 1 to 4, and still further optionally in the range of 1.5 to 3; and/or,
a:x is in the range of 1 to 1200, optionally in the range of 9 to 1100, and more optionally in the range of 190-998.

Here, y represents the sum of the stoichiometric numbers of the doping element at the site of Mn. When the above conditions are satisfied, the energy density and cycling performance of the second positive electrode active material can be further improved.

In some embodiments, z: (1-z) is 1:9 to 1:999, optionally 1:499 to 1:249. When the above conditions are satisfied, the energy density and cycling performance of the second positive electrode active material can be further improved.

In some embodiments, A includes one or more elements selected from Zn, Al, Na, K, Mg, Nb, Mo and W; B includes one or more elements selected from Ti, V, Zr, Fe, Ni, Mg, Co, Ga, Sn, Sb, Nb and Ge; C includes one or more elements selected from B (boron), S, Si and N; D includes one or more elements selected from S, F, Cl and Br; a is selected from the range of 0.9 to 1.1, x is selected from the range of 0.001 to 0.1, y is selected from the range of 0.001 to 0.5, z is selected from the range of 0.001 to 0.1, and n is selected from the range of 0.001 to 0.1.

By simultaneously doping a specific element in a specific amount at the Li site, Mn site, P site and O site of the compound LiMnPO₄, improved rate performance can be obtained while reducing the dissolution of Mn and the doping element at the Mn site, improved cycling performance and/or high-temperature stability can be obtained, and the gram capacity and compacted density of the second positive electrode active material can also be increased.

In some embodiments, B includes one or more elements selected from Zn, Al, Na, K, Mg, Mo, W, Ti, V, Zr, Fe, Ni, Co, Ga, Sn, Sb, Nb and Ge, optionally includes one or more elements selected from Zn, Fe, Ti, V, Ni, Co and Mg; C includes one or more elements selected from B (boron), Si, N and S; a is selected from the range of 0.9 to 1.1, x is 0, y is selected from the range of 0.001 to 0.5, z is selected from the range of 0.001 to 0.1, and n is 0.

By simultaneously doping a specific element in a specific amount at the Mn site and P site of the compound LiMnPO₄, it can improve the rate performance, reduce the dissolution of Mn and the doping element at the Mn site, improve the cycling performance and/or high-temperature stability, and increase the gram capacity and compacted density of the second positive electrode active material.

In some embodiments, the second positive electrode active material comprises an inner core and a shell cladding the inner core, and the inner core comprises the compound represented by the above formula (I). The shell comprises one or more cladding layers. The cladding layer has ionic conductivity and/or electronic conductivity. In practice, each cladding layer may be in a fully or partially cladding.

By providing a cladding layer with ionic conductivity and/or electronic conductivity on the surface of the inner core, a second positive electrode active material with an inner core-shell structure is provided, and applying the second positive electrode active material to the battery can improve the high-temperature cycling performance, cycling stability and high-temperature storage performance of the battery.

In some embodiments, the shell comprises a cladding layer; and optionally, the cladding layer comprises one or more selected from pyrophosphates, phosphates, carbon, doped carbon, oxides, borides and polymers.

The above materials can be used to obtain a cladding layer with ionic conductivity and/or electronic conductivity, thereby improving the high-temperature cycling performance, cycling stability and high-temperature storage performance of the battery.

In some embodiments, the shell comprises a first cladding layer cladding the inner core and a second cladding layer cladding the first cladding layer; optionally, the first cladding layer and the second cladding layer each independently comprise one or more selected from pyrophosphates, phosphates, carbon, doped carbon, oxides, borides and polymers.

Using the above materials as the materials for the cladding layer and providing two cladding layers can further improve the high-temperature cycling performance, cycling stability and high-temperature storage performance of the battery.

In some embodiments, the first cladding layer comprises one or more selected from pyrophosphates, phosphates, oxides, and borides, and the second cladding layer comprises one or more selected from carbon and doped carbon.

The use of a first cladding layer of a specific material and a second cladding layer of a specific material can further improve the rate performance and further reduce the dissolution of Mn and Mn-doping elements, thereby improving the cycling performance and/or high-temperature stability of the battery.

In some embodiments, the shell comprises a first cladding layer cladding the inner core, a second cladding layer cladding the first cladding layer and a third cladding layer cladding the second cladding layer; optionally, the first cladding layer, the second cladding layer and the third cladding layer each independently comprise one or more selected from pyrophosphates, phosphates, carbon, doped carbon, oxides, borides and polymers.

Using the above materials as the materials for the cladding layers and providing three cladding layers can further reduce the dissolution of Mn and Mn-site doping elements, and further improve the high-temperature cycling performance, cycling stability and high-temperature storage performance of the battery.

In some embodiments, the first cladding layer comprises pyrophosphates, the second cladding layer comprises one or more selected from phosphates, oxides, and borides, and the third cladding layer comprises one or more selected from carbon and doped carbon.

The use of a first cladding layer of a specific material, a second cladding layer of a specific material, and a third cladding layer of a specific material further improves the rate performance, further reduces the dissolution of Mn and Mn-doping elements, thereby improving the cycling performance and/or high-temperature stability of the battery, and further increasing the gram capacity and compacted density of the second positive electrode active material.

In some embodiments, the one or more cladding layers each independently comprise one or more selected from pyrophosphates, phosphates, carbon, doped carbon, oxides, borides and polymers.

In some embodiments, the pyrophosphate is M_{b}(P₂O₇)_{c}; and/or,
the phosphate is Xₘ(PO₄)_{q}; and/or,
the doping element in the doped carbon includes one or more elements selected from group IIIA, group VA, group VIA and group VIIA; and/or,
the oxide is M'_{d}O_{c}; and/or,
the boride is ZᵥB_{w}; and/or,
the polymer includes one or more selected from polysaccharides and their derivatives, and polysiloxanes;
M, X and Z each independently include one or more elements selected from group IA, group IIA, group IIIA, group IB, group IIB, group IVB, group VB, group VIIB and group VIII;
b is selected from the range of 1 to 4, c is selected from the range of 1 to 6; m is selected from the range of 1 to 2, q is selected from the range of 1 to 4;
M' includes one or more elements selected from alkali metals, alkaline earth metals, transition metals, Group IIIA elements, Group IVA elements, lanthanides and Sb;
d is greater than 0 and less than or equal to 2, e is greater than 0 and less than or equal to 5;
v is selected from the range of 1 to 7, and w is selected from the range of 1 to 2.

By using the above materials as the cladding layer, the dissolution of Mn and Mn-doping elements can be further reduced, the gram capacity and compacted density of the second positive electrode active material can be further increased, and the rate performance, high-temperature cycling performance and high-temperature storage performance of the battery can be further improved.

In some embodiments, M, X and Z each independently include one or more elements selected from Li, Fe, Ni, Mg, Co, Cu, Zn, Ti, Ag, Zr, Nb, Mn and Al; and/or,
the doping element in the doped carbon includes one or more selected from nitrogen, phosphorus, sulfur, boron and fluorine; and/or,
M' includes one or more elements selected from Li, Be, B, Na, Mg, Al, Si, P, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La and Ce, and optionally includes one or more elements selected from Mg, Al, Si, Zn, Zr and Sn; and/or,
the polysiloxane is selected from one or more of linear polysiloxanes and cyclic polysiloxanes; and/or,
the polysaccharide is selected from one or more of plant polysaccharides and marine polysaccharides.

By using the above-mentioned specific material as the cladding layer, the dissolution of Mn and Mn-doping elements can be further reduced, and the high-temperature cycling performance and high-temperature storage performance of the battery can be further improved.

In some embodiments, the second positive electrode active material comprises an inner core and a shell cladding the inner core.

The inner core comprises LiₐMn_{1-y}B_{y}P_{1-z}C_{z}O₄, where a is selected from the range of 0.9 to 1.1, y is selected from the range of 0.001 to 0.5, z is selected from the range of 0.001 to 0.1, B includes one or more elements selected from Ti, V, Zr, Fe, Ni, Mg, Co, Ga, Sn, Sb, Nb and Ge, and C includes one or more elements selected from B (boron), S, Si and N.

The shell comprises a first cladding layer cladding the inner core and a second cladding layer cladding the first cladding layer, the first cladding layer comprises pyrophosphate MP₂O₇ and phosphate XPO₄, where M and X each independently include one or more elements selected from Li, Fe, Ni, Mg, Co, Cu, Zn, Ti, Ag, Zr, Nb and Al; and the second cladding layer comprises carbon.

The second positive electrode active material may be an inner core-shell structure having two cladding layers. The element B doped at the manganese site of the lithium manganese phosphate helps to reduce the lattice change rate of the lithium manganese phosphate during lithium (de)intercalation, thereby improving the structural stability of the second positive electrode active material, greatly reducing the dissolution of manganese and reducing the oxygen activity on the particle surface. The element C doped at the phosphorus site helps to change the difficulty in changing the Mn-O bond length, thereby reducing the potential barrier to lithium ion migration, promoting lithium ion migration, and improving the rate performance of the battery. The first cladding layer of the second positive active material comprises pyrophosphates and phosphates. Since the migration potential barrier of transition metals in pyrophosphate is relatively high (>1eV), the dissolution of transition metals can be effectively reduced. Phosphates have excellent ability to conduct lithium ions and can reduce the surface impurity lithium content. In addition, since the second cladding layer is a carbon-containing layer, it can effectively improve the electrical conductivity and desolvation ability of LiMnPO₄. In addition, the "barrier" effect of the second cladding layer can further reduce the migration of manganese ions into the electrolyte solution and reduce the corrosion of the electrolyte solution to the second active material. Therefore, by doping lithium manganese phosphate with specific elements and cladding its surface, the dissolution of Mn during lithium intercalation can be effectively reduced while promoting the migration of lithium ions, thereby improving the rate performance of the battery and enhancing the cycling performance and high-temperature performance of the battery.

In some embodiments, the second positive electrode active material comprises an inner core and a shell cladding the inner core.

The inner core comprises LiₐMn_{1-y}B_{y}P_{1-z}C_{z}O₄, where a is selected from the range of 0.9 to 1.1, y is selected from the range of 0.001 to 0.5, z is selected from the range of 0.001 to 0.1, B includes one or more elements selected from Ti, V, Zr, Fe, Ni, Mg, Co, Ga, Sn, Sb, Nb and Ge, and C includes one or more elements selected from B (boron), S, Si and N.

The shell comprises a first cladding layer cladding the inner core, a second cladding layer cladding the first cladding layer and a third cladding layer cladding the second cladding layer.

The first cladding layer comprises pyrophosphate Li_{f}QP₂O₇ and/or Q_{g}(P₂O₇)ₕ, where 0≤f≤2, 1≤g≤4, and 1≤h≤6, and Q in pyrophosphate Li_{f}QP₂O₇ and/or Q_{g}(P₂O₇)ₕ each independently includes one or more elements selected from Fe, Ni, Mg, Co, Cu, Zn, Ti, Ag, Zr, Nb and Al.

The second cladding layer comprises crystalline phosphate XPO₄, where X includes one or more elements selected from Li, Fe, Ni, Mg, Co, Cu, Zn, Ti, Ag, Zr, Nb and Al.

The third cladding layer comprises carbon.

As a result, the second positive electrode active material can improve the gram capacity and cycling performance of the battery.

The second positive electrode active material has an inner core-shell structure. By doping element B and element C respectively at the manganese and phosphorus sites of the inner core, not only can the manganese dissolution be effectively reduced, thereby reducing the manganese ions migrating to the negative electrode, reducing the electrolyte solution consumed due to the decomposition of the SEI film, and improving the cycling performance of the battery, but also it can promote the adjustment of the Mn-O bond and reduce the potential barrier to lithium ion migration, promote the migration of lithium ions and improve the rate performance of the battery. By cladding the inner core with the first cladding layer comprising a pyrophosphate, the migration resistance of manganese can be further increased, its dissolution can be reduced, and the content of surface lithium impurities can be decreased, thereby reducing the contact between the inner core and the electrolyte solution and the interfacial side reactions, decreasing gas generation, and improving the high-temperature storage performance and cycling performance of the battery. By further cladding the phosphate cladding layer with excellent lithium-ion conduction ability, the interfacial side reactions on the surface of the second positive electrode active material can be effectively reduced, thereby improving the high-temperature cycling and storage performance of the battery. By further cladding the carbon layer as the third cladding layer, the kinetic performance of the battery can be further enhanced. In addition, in the inner core, the doping of element B at the manganese site also helps to reduce the lattice change rate of lithium manganese phosphate during the process of (de)intercalating lithium, improve the structural stability of the second positive electrode active material, greatly reduce the dissolution of manganese and reduce the oxygen activity on the particle surface; the doping of element C at the phosphorus site also helps to change the difficulty in changing the Mn-O bond length, thereby improving the electronic conductivity and reducing the potential barrier to lithium ion migration, promoting lithium ion migration and improving the rate performance of the battery.

In addition, the whole core system remains electrically neutral, which can make the defects and impurity phases in the second positive electrode active material as few as possible. If there is an excess of transition metals (such as manganese) in the second positive electrode active material, due to the relatively stable structure of the material system, the excessive transition metals are likely to be precipitated in the form of elemental substances, or form impurity phases inside the lattice, and remaining electrically neutral can minimize such impurity phases. In addition, ensuring the electrical neutrality of the system can also generate lithium vacancies in the material in some cases, so that the kinetic performance of the second positive electrode active material becomes much better.

In some embodiments, the one or more cladding layers in the shell that are farthest from the inner core each independently comprise one or more selected from polysiloxanes, polysaccharides and polysaccharide derivatives.

As a result, the uniformity of cladding can be improved, and the interfacial side reactions caused by high voltage can be effectively blocked, thereby improving the high-temperature cycling performance and high-temperature storage performance of the second positive electrode active material; and the cladding layer has good ionic conductivity, which helps to improve the gram capacity of the second positive electrode active material while reducing the heat generation of the battery.

In some embodiments, the polysiloxane comprises a structural unit represented by formula (i) below, 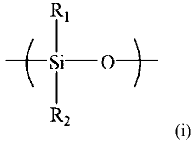 R₁ and R₂ are independently selected from H, -COOH, -OH, -SH, -CN, -SCN, amino, phosphate, carboxylate, amido, aldehyde, sulfonyl, polyether segment, C1-C20 aliphatic hydrocarbon groups, C1-C20 halogenated aliphatic hydrocarbon groups, C1-C20 heteroaliphatic hydrocarbon groups, C1-C20 halogenated heteroaliphatic hydrocarbon groups, C6-C20 aromatic hydrocarbon groups, C6-C20 halogenated aromatic hydrocarbon groups, C2-C20 heteroaromatic hydrocarbon groups and C2-C20 halogenated heteroaromatic hydrocarbon groups;
optionally, R₁ and R₂ are independently selected from H, amino, phosphate, polyether segment, C1-C8 alkyl, C1-C8 haloalkyl, C1-C8 heteroalkyl, C1-C8 haloheteroalkyl, C2-C8 alkenyl and C2-C8 haloalkenyl.

In some embodiments, the polysiloxane further comprises an end-capping group, and the end-capping group includes one or more of the group consisting of the following functional groups: polyether, C1-C8 alkyl, C1-C8 haloalkyl, C1-C8 heteroalkyl, C1-C8 haloheteroalkyl, C2-C8 alkenyl, C2-C8 haloalkenyl, C6-C20 aromatic hydrocarbon group, C1-C8 alkoxy, C2-C8 epoxy, hydroxyl, C1-C8 hydroxyalkyl, amino, C1-C8 aminoalkyl, carboxyl, and C1-C8 carboxylalkyl.

In some embodiments, the polysiloxane includes one or more selected from polydimethylsiloxane, polydiethylsiloxane, polymethylethylsiloxane, polymethylvinylsiloxane, polyphenylmethylsiloxane, polymethylhydrogensiloxane, carboxyl functionalized polysiloxane, epoxy-terminated polysiloxane, methoxy-terminated polydimethylsiloxane, hydroxypropyl-terminated polydimethylsiloxane, polymethylchloropropylsiloxane, hydroxy-terminated polydimethylsiloxane, polymethyltrifluoropropylsiloxane, perfluorooctylmethylpolysiloxane, aminoethylaminopropylpolydimethylsiloxane, polyether-terminated polydimethylsiloxane, aminopropyl-branched polysiloxane, aminopropyl-terminated polydimethylsiloxane, phosphate-branched grafted polydimethylsiloxane, polyether-branched grafted polydimethylsiloxane, 1,3,5,7-octamethylcyclotetrasiloxane, 1,3,5,7-tetrahydro-1,3,5,7-tetramethylcyclotetrasiloxane, cyclopentapolydimethylsiloxane, 2,4,6,8-tetramethylcyclotetrasiloxane, 2,4,6,8-tetramethyl-2,4,6,8-tetravinylcyclotetrasiloxane, cyclic polymethylvinylsiloxane, hexadecamethylcyclooctasiloxane, tetradecamethylcycloheptasiloxane, and cyclic polydimethylsiloxane.

In some embodiments, the number average molecular weight of the polysiloxane, the polysaccharide and the polysaccharide derivative are each independently below 300,000, optionally 10,000 to 200,000, more optionally 20,000 to 120,000, and further optionally 400 to 80,000.

The number average molecular weight of polysiloxanes, polysaccharides and polysaccharide derivatives can be measured by methods known in the art, for example, using gel permeation chromatography (GPC). The testing instrument may be a PL-GPC 220 high-temperature gel permeation chromatograph.

In some embodiments, the percentage mass content of polar functional groups in the polysiloxane is α, 0≤α<50%, optionally, 5%≤α≤30%.

"The percentage mass content of polar functional groups in the polysiloxane" refers to the percentage mass content of polar functional groups in R₁, R₂ and end-capping groups in the polysiloxane. Polar functional groups include one or more of -COOH, - OH, -SH, -CN, -SCN, amino (including -NH₂, -NH-), phosphate, carboxylate (-COO-), amido (-CONH-), aldehyde (-CHO), sulfonyl (-S(=O)₂-), polyether segment, halogen, alkoxy, and epoxy. When the above polar functional groups are directly connected to silicon atoms, α represents the mass fraction of these polar functional groups in polysiloxane; when the above polar functional groups are not directly connected to silicon atoms, α represents the sum of the mass fractions of polar functional groups and divalent to tetravalent methyl (such as -CH₂, -CH-, -C-) directly connected thereto in polysiloxane, where "divalent to tetravalent methyl" represents carbon atoms directly connected to polar functional groups and located between polar functional groups and silicon atoms, as well as other non-polar functional groups connected to carbon atoms. Taking polymethyltrifluoropropylsiloxane as an example, α refers to the percentage mass content of -CF₃ therein, excluding the ethylene therein; taking polymethylchloropropylsiloxane as an example, α refers to the percentage mass content of -CH₂Cl, excluding the ethylene therein; taking hydroxypropyl-terminated polydimethylsiloxane as an example, α refers to the percentage mass content of -CH₂OH. The percentage mass content of polar functional groups in the polysiloxane can be determined by methods known in the art, such as titration (e.g., acid-base titration, redox titration, precipitation titration), infrared spectroscopy, and nuclear magnetic resonance spectroscopy.

In some embodiments, the substituents attached to the sugar units in the polysaccharides and polysaccharide derivatives each independently include one or more of the group consisting of the following functional groups: -OH, -COOH and salts thereof, -R-OH, -SO₃H and salts thereof, -R-OH, -R-SO₃H and salts thereof, sulfate, and alkoxy, where R represents alkylene, optionally C1-C5 alkylene.

Optionally, the substituents attached to the sugar units in the polysaccharide and polysaccharide derivatives each independently include one or more of the group consisting of the following functional groups: -OH, -COOH, -COOLi, -COONa, - COOK, -SO₃H, -SO₃Li, -SO₃Na, -SO₃K, -CH₂-SO₃H, -CH₂-SO₃Li, -CH₂-SO₃Na, -CH₂-SO₃K, methoxy, and ethoxy.

The term "substituents attached to the sugar unit" includes all groups attached to the sugar unit backbone.

In some embodiments, the polysaccharide includes one or more selected from pectin, carboxymethyl starch, hydroxypropyl starch, dextrin, cellulose ether, carboxymethyl chitosan, hydroxyethyl cellulose, carboxymethyl cellulose, carboxypropyl methyl cellulose, guar gum, sesbania gum, gum arabic, lithium alginate, sodium alginate, potassium alginate, fucoidan, agar, carrageenan, carrageenin, xanthan gum and fenugreek gum.

In some embodiments, the percentage mass content of substituents attached to the sugar units in the polysaccharide and polysaccharide derivative can be determined by known methods in the art, such as titration (e.g., acid-base titration, redox titration, precipitation titration), infrared spectroscopy, and nuclear magnetic resonance spectroscopy.

In some embodiments, the lattice mismatch between the material of the inner core and the material of the shell is less than 10%. This can improve the contact between the inner core and the shell (or cladding layer) to prevent the shell (or cladding layer) from falling off.

In some embodiments, based on the weight of the positive electrode active material,
the manganese element content is in the range of 10wt% to 35wt%, optionally in the range of 13.3wt% to 33.2wt%, more optionally in the range of 15wt% to 30wt%, and further optionally in the range of 17wt% to 20wt%; and/or,
the phosphorus element content is in the range of 12wt%-25wt%, optionally in the range of 15wt%-20wt%, and more optionally in the range of 16.8wt%-19.5wt%; and/or,
the weight ratio of manganese element to phosphorus element is in the range of 0.71-1.85, optionally 0.90-1.25, and more optionally 0.95-1.20.

In the case where manganese is contained only in the inner core of the second positive electrode active material, the content of manganese may correspond to the content in the inner core.

Limiting the content of manganese within the above range can further improve the stability and density of the second positive electrode active material, thereby improving the battery's cycling performance, storage performance and compacted density, etc.; and can maintain a higher voltage plateau, thereby improving the battery's energy density.

Limiting the content of phosphorus within the above range can effectively reduce the influence of small polaron conductivity on the conductivity of the second positive electrode active material, and can further improve the stability of the lattice structure, thereby improving the overall stability of the second positive electrode active material.

Limiting the weight ratio of manganese to phosphorus within the above range can further reduce manganese dissolution, improve the stability and gram capacity of the second positive electrode active material, and improve the cycling performance and storage performance of the battery; it can also reduce impurity phases, enable the second positive electrode active material to maintain a higher discharge voltage plateau, and enable the battery to have a high energy density.

The measurement of elements manganese and phosphorus can be carried out by conventional technical means in the art. In particular, the contents of manganese and phosphorus are determined as follows. The material is dissolved in dilute hydrochloric acid (with a concentration of 10-30%), the contents of various elements in the solution are tested by ICP, and then the content of manganese is measured and calculated, to get its weight proportion.

In some embodiments, the surface of the second positive electrode active material is cladded with one or more of carbon and doped carbon; optionally, the surface of the second positive electrode active material is cladded with carbon. Thus, the conductivity of the second positive electrode active material can be improved.

In some embodiments, the doping element in the doped carbon includes one or more selected from nitrogen, phosphorus, sulfur, boron and fluorine. It is convenient to control the performance of the doped carbon layer.

In some embodiments, the cladding amount of the shell (only one cladding layer) is 0.1wt% to 6wt% based on the weight of the inner core. The cladding amount of the cladding layer is preferably within the above range, which can fully coat the inner core and further improve the kinetic performance of the battery without sacrificing the gram capacity of the second positive electrode active material.

In some embodiments, the cladding amount of the first cladding layer is greater than 0 and less than or equal to 7wt%, optionally greater than 0 and less than or equal to 6wt%, more optionally greater than 0 and less than or equal to 5.5wt% or 4-5.6wt%, and further optionally greater than 0 and less than or equal to 2wt%, based on the weight of the inner core; and/or
the cladding amount of the second cladding layer is greater than 0 and less than or equal to 6wt%, optionally greater than 0 and less than or equal to 5.5wt%, and more optionally 2-4wt% or 3-5wt%, based on the weight of the inner core; and/or,
the cladding amount of the third cladding layer is greater than 0 and less than or equal to 6wt%, optionally greater than 0 and less than or equal to 5.5wt%, and more optionally greater than 0 and less than or equal to 2wt%, based on the weight of the inner core.

In some embodiments, the shell further includes a fourth cladding layer cladding the third cladding layer and a fifth cladding layer cladding the fourth cladding layer.

The cladding amounts of the fourth cladding layer and the fifth cladding layer are each independently 0.01wt% to 10wt%, optionally 0.05wt% to 10wt%, more optionally 0.1wt% to 5wt%, and further 0.1wt% to 2wt%, based on the weight of the inner core.

In the second positive electrode active material having an inner core-shell structure of the present application, the cladding amounts of the cladding layers are preferably within the above ranges, so that the inner core can be sufficiently cladded, and the kinetic performance of the battery can be further improved without compromising the gram capacity of the second positive electrode activity material.

In some embodiments, the shell is located on 40% to 90% of the surface of the inner core, optionally 60% to 80% of the surface. Therefore, the inner core can be fully cladded, thereby improving the kinetic performance of the battery.
In some embodiments, the thickness of the shell (only one cladding layer) is 1-15 nm.
In some embodiments, the thickness of the first cladding layer is 1-10nm, and optionally 2-10nm; and/or,
the thickness of the second cladding layer is 2-25nm, optionally 2-15nm, and more optionally 3-15nm; and/or,
the thickness of the third cladding layer is 2-25nm, and optionally 5-25nm.

In some embodiments, the thickness of the first cladding layer may be about 2 nm, about 3 nm, about 4 nm, about 5 nm, about 6 nm, about 7 nm, about 8 nm, about 9 nm, or about 10 nm, or within any range defined by any value above.

In some embodiments, the thickness of the second cladding layer may be about 2 nm, about 3 nm, about 4 nm, about 5 nm, about 6 nm, about 7 nm, about 8 nm, about 9 nm, about 10 nm, about 11 nm, about 12 nm, about 13 nm, about 14 nm, about 15 nm, or within any range defined by any value above.

In some embodiments, the thickness of the third cladding layer may be about 2 nm, about 3 nm, about 4 nm, about 5 nm, about 6 nm, about 7 nm, about 8 nm, about 9 nm, about 10 nm, about 11 nm, about 12 nm, about 13 nm, about 14 nm, about 15 nm, about 16 nm, about 17 nm, about 18 nm, about 19 nm, about 20 nm, about 21 nm, about 22 nm, about 23 nm, about 24 nm, about 25 nm, or within any range defined by any value above.

The first cladding layer has the above thickness range, which can further reduce the adverse effect on the kinetic performance of the second positive electrode active material.

When the second cladding layer has the above thickness range, the surface structure of the second cladding layer is stable, and the side reactions with the electrolyte solution are less, so the interfacial side reactions can be effectively reduced, thereby improving the high-temperature performance of batteries.

When the third cladding layer has the above thickness range, the electrical conductivity performance of the second positive electrode active material can be improved and the compacted density of the positive electrode plate prepared with the second positive electrode active material can be improved.

The thickness of the cladding layer is mainly tested by FIB. The specific method may comprises the following steps: randomly selecting a single particle from the second positive electrode active material powder to be tested, cutting a thin slice with a thickness of about 100 nm from a middle site of or near the middle site of the selected particle, testing the slice by TEM, determining the thickness of the cladding layer, and averaging the measurements of 3-5 sites.

In some embodiments, the one or more cladding layers each independently comprise one or more selected from pyrophosphates, phosphates, and oxides, and the one or more selected from pyrophosphates, phosphates, and oxides are crystalline.

Optionally, the crystallinities of the pyrophosphate, the phosphate and the oxide are each independently 10% to 100%, and more optionally 50% to 100%.

Herein, crystalline means that the crystallinity is 50% or higher, that is, 50%-100%. That is, when the crystalline pyrophosphate and crystalline phosphate of the present application appear, it indicates that the crystallinity is 50% to 100%.

Pyrophosphate and phosphate with a certain crystallinity not only promote the full exertion of the ability of the pyrophosphate cladding layer to reduce manganese dissolution and the excellent lithium ion-conducting ability of the phosphate cladding layer to reduce the interfacial side reactions, but also allow for better lattice matching between the pyrophosphate cladding layer and the phosphate cladding layer, thereby enabling tight bonding between the cladding layers.

It should be noted that the crystallinity can be adjusted, for example, by adjusting the process conditions in the sintering process, such as sintering temperature and sintering time. The crystallinity can be measured by methods known in the art, such as X-ray diffraction, densimetry, infrared spectroscopy, differential scanning calorimetry, and nuclear magnetic resonance absorption. A specific X-ray diffraction method for testing the crystallinity of the second positive electrode active material may include the following steps:
taking a certain amount of the second positive electrode active material powder and measuring the total scattering intensity by X-ray, which is the sum of the scattering intensities of all the substances in the entire space and is only related to the intensity of the primary rays, the chemical structure of the second positive electrode active material powder, and the total number, i.e. the mass of electrons participating in the diffraction, but has nothing to do with the order state of the sample; then separating the crystalline scattering form the non-crystalline scattering in the diffraction pattern, wherein crystallinity is the ratio of the scattering of the crystalline part to the total scattering intensity.

In some embodiments, in the shell, the weight ratio of pyrophosphate to phosphate and the weight ratio of pyrophosphate to oxide are each independently 1:3 to 3:1, and optionally 1:3 to 1:1. Thus, by having pyrophosphate and phosphate in a suitable weight ratio range or pyrophosphate and oxide in a suitable weight ratio range, it can effectively reduce manganese dissolution, effectively reduce the surface impurity lithium content, and reduce interfacial side reactions, thereby improving the high-temperature storage performance and high-temperature cycling performance of the battery.

In some embodiments, the one or more cladding layers each independently comprise carbon, and the carbon is a mixture of SP2-form carbon and SP3-form carbon; optionally, the molar ratio of SP2-form carbon to SP3-form carbon in the carbon is any value within the range of 0.07-13, more optionally any value within the range of 0.1-10, and further optionally any value within the range of 2.0-3.0.

In some embodiments, the molar ratio of SP2-form carbon to SP3-form carbon may be about 0.1, about 0.2, about 03, about 0.4, about 0.5, about 0.6, about 0.7, about 0.8, about 0.9, about 1, about 2, about 3, about 4, about 5, about 6, about 7, about 8, about 9, or about 10, or within any range defined by any value above.

In the present application, "about" before a numerical value indicates a range, indicating a range of ±10% of the numerical value.

By selecting the form of carbon in the carbon cladding layer, the overall electrical performance of the battery can be improved. Specifically, by using a mixture of SP2-form carbon and SP3-form carbon and limiting the ratio of SP2-form carbon to SP3-form carbon within a certain range, the following situations can be avoided: if the carbon in the cladding layer is all in amorphous SP3 form, the conductivity is poor; if it is all in graphitized SP2 form, although the conductivity is good, there are few lithium ion pathways, which is not conducive to lithium (de)intercalation. In addition, defining the molar ratio of SP2-form carbon to SP3-form carbon within the above range can not only achieve good electrical conductivity, but also promote the transport of lithium ions, so it is beneficial to the realization of the function of the battery and its cycling performance.

The mixing ratio of SP2-form carbon to SP3-form carbon can be controlled by sintering conditions such as sintering temperature and sintering time. The molar ratio of SP2-form carbon to SP3-form carbon can be determined by Raman spectroscopy. The specific test method comprises: splitting the spectrum of the Raman test, to obtain Id/Ig (where Id is the peak intensity of SP3-form carbon, and Ig is the peak intensity of SP2-form carbon), thereby confirming the molar ratio of the two.

In some embodiments, doped carbon, and the mass content of the doping element in the doped carbon is 30% or less; optionally, the mass content of the doping element in the doped carbon is 20% or less. The doping elements within the above content range can not only fully improve the conductivity of the pure carbon layer, but also effectively avoid excessive surface activity caused by excessive doping of the doping elements, thereby effectively controlling the interfacial side reactions caused by excessive doping of the cladding layer.

In some embodiments, the one or more cladding layers each independently comprise doped carbon, and in the doped carbon,
the doping element is nitrogen element and/or sulfur element, and the mass content of the doping element in the doped carbon is 1% to 15%; or,
the doping element is phosphorus element, boron element and/or fluorine element, and the mass content of the doping element in the doped carbon is 0.5% to 5%;
optionally, the doping element is nitrogen, phosphorus, sulfur, boron or fluorine.

Since nitrogen atoms and sulfur atoms are closer to carbon atoms in terms of atomic radius and are not easy to destroy the carbon skeleton, when the doping amounts of nitrogen atoms and sulfur atoms are within the above relatively wide ranges, the conductivity of the doped carbon layer can be fully exerted, and lithium ion transport and lithium ion desolvation ability can be promoted.

Since the atomic radius of phosphorus atoms, boron atoms and/or fluorine atoms is different from that of carbon atoms and excessive doping can easily destroy the carbon skeleton, when the doping amounts of phosphorus atoms, boron atoms and/or fluorine atoms are within the relatively small ranges mentioned above, the conductivity of the doped carbon layer can be fully exerted, and lithium ion transport and lithium ion desolvation ability can be promoted.

In some embodiments, the one or more cladding layers each independently comprise a pyrophosphate, and the pyrophosphate has an interplanar spacing in the range of 0.293-0.470 nm, optionally 0.297-0.462 nm or 0.293-0.326 nm, and more optionally 0.300-0.310 nm, and a crystal direction (111) angle in the range of 18.00°-32.57°, optionally 18.00°-32.00° or 26.41°-32.57°, more optionally 19.211°-30.846°, and further optionally 29.00°-30.00°; and/or,
the one or more cladding layers each independently comprise a phosphate, and the phosphate has an interplanar spacing in the range of 0.244-0.425 nm, optionally 0.345-0.358 nm, and a crystal direction (111) angle in the range of 20.00°-37.00°, optionally 24.25°-26.45°;
optionally, the first cladding layer or the second cladding layer comprises a phosphate.

The first cladding layer and the second cladding layer in the second positive electrode active material are both formed of crystalline substances having an interplanar spacing and an angle falling within the above-mentioned ranges. Thus, the impurity phases in the cladding layer can be effectively reduced, thereby improving the gram capacity, cycling performance and rate performance of the material.

In some embodiments, the lattice change rate of the second positive electrode active material before and after complete lithium (de)intercalation is 50% or less, optionally 9.8% or less, more optionally 8.1% or less, further optionally 7.5% or less, still further optionally 6% or less, still further optionally 4% or less, still further optionally 3.8% or less, and still further optionally 2.0-3.8%.

By reducing the lattice change rate, Li ion transport can be made easier, that is, the migration ability of Li ions in the second positive electrode active material is stronger, which is beneficial to improving the rate performance of the battery. The lattice change rate can be measured by methods known in the art, such as X-ray diffraction spectroscopy (XRD).

In some embodiments, the Li/Mn antisite defect concentration of the second positive electrode active material is 5.3% or less, optionally 5.1% or less, more optionally 4% or less, further optionally 2.2% or less, still further optionally 2% or less, and still further optionally 1.5%-2.2% or 0.5% or less.

The Li/Mn antisite defect refers to the exchange of the positions of Li⁺ and Mn²⁺ in the lattice of LiMnPO₄. The Li/Mn antisite defect concentration refers to the percentage of Li⁺ that exchanges with Mn²⁺ relative to the total amount of Li⁺ in the second positive electrode active material. Mn²⁺ with antisite defects will hinder the transport of Li⁺, and reducing the Li/Mn antisite defect concentration helps to improve the gram capacity and rate performance of the second positive electrode active material. The Li/Mn antisite defect concentration can be measured by methods known in the art, such as XRD.

In some embodiments, the surface oxygen valence state of the second positive electrode active material is -1.55 or less, optionally -1.82 or less, more optionally -1.88 or less, further optionally -1.90 or less or -1.98 to -1.88, still further optionally -1.98 to -1.89, and still further optionally -1.98 to -1.90.

By reducing the surface oxygen valence state, the interfacial side reactions between the second positive electrode active material and the electrolyte solution can be reduced, thus improving the cycling performance and high-temperature stability of the battery. The surface oxygen valence state can be measured by methods known in the art, such as by electron energy loss spectroscopy (EELS).

In some embodiments, the first positive electrode active material may comprise one or more of a layered oxide material, a lithium-rich oxide material, a spinel lithium manganese oxide material, and their respective modified compounds, and the modification method includes doping and/or surface cladding modification.

The first positive electrode active material has a high compacted density, but is costly and has many side reactions during battery use, and its crystal structure stability is poor compared to the first positive electrode material. By reasonably combining the above-mentioned second positive electrode active material with the first positive electrode active material, the actual stacking density of the positive electrode active material composition can be improved, the compacted density and compacted density efficiency of the positive electrode plate can be improved, and the battery can also have high energy density, low costs and good service life simultaneously.

In some embodiments, the first positive electrode active material comprises a compound represented by formula (II),

Liₐ₁A¹_{b1}Ni_{c1}Co_{d1}¹_{c1}C¹_{f1}O_{2-g1}D¹_{g1} (II)

A¹ includes one or more elements selected from group IA, group IIA, group VIII, group VIB, and group IIB; B¹ includes Mn and/or Al; C¹ includes one or more elements selected from group IA, group IIA, group IIIA, group IVA, VA, group VIA, group IIB, group IIIB, group IVB, group VB, group VIB and group VIII; D¹ includes one or more elements selected from group VIA and group VIIA; al is selected from the range of 0.8 to 1.2; bl is selected from the range of 0 to 0.2; c1 is selected from the range of 0 to 1; d1 is selected from the range of 0 to 1; el is selected from the range of 0 to 1; f1 is selected from the range of 0 to 0.1; gl is selected from the range of 0 to 0.1; and c1+d1+e1+f1=1.

In some embodiments, A¹ includes one or more elements selected from Na, K, Mg, Rb, Zn and Zr; and/or,
C¹ includes one or more elements selected from Al, Mg, Ca, Na, Ti, W, Zr, Sr, Cr, Fe, Zn, Ba, Mo, V, Ce, Nb, Sb, Ta, Ge, Nb, Sc, Ba, B, S and Y, and optionally selected from one or more elements selected from Al, Ti, Zr, Nb, Sr, Sc, Sb, Y, Ba, and B; and/or,
D¹ includes one or more elements selected from N, S, F, Cl and Br, and optionally includes S and/or F; and/or,
al is selected from the range of 0.9 to 1.1; and/or,
b1 is selected from the range of 0 to 0.1; and/or,
c1 is selected from the range of 0.314 to 0.990, and optionally selected from the range of 0.500 to 0.990; and/or,
d1 is selected from the range of 0 to 0.320, and optionally selected from the range of 0 to 0.150; and/or,
e1 is selected from the range of 0.001 to 0.450, and optionally selected from the range of 0.005 to 0.4; and/or,
f1 is selected from the range of 0.001 to 0.1, and optionally selected from the range of 0.001 to 0.05; and/or,
gl is selected from the range of 0 to 0.01, and optionally selected from the range of 0.01 to 0.05.

In some embodiments, the first positive electrode active material comprises an inner core and a shell cladding the inner core, the inner core comprises the compound represented by formula (II); the shell comprises one or more cladding layers. Each cladding layer has ionic conductivity and/or electronic conductivity.

In some embodiments, the one or more cladding layers in the shell cladding the compound represented by formula (II) independently comprise one or more selected from phosphates, pyrophosphates, carbon, doped carbon, oxides, and fast ion conductors, and optionally one or more selected from phosphates, pyrophosphates, and oxides.

In some embodiments, the shell cladding the compound represented by formula (II) comprises a cladding layer; and optionally, the cladding layer comprises one or more selected from phosphates, pyrophosphates, and oxides.

In some embodiments, the shell cladding the compound represented by formula (II) comprises a first cladding layer cladding the inner core and a second cladding layer cladding the first cladding layer; optionally, the first cladding layer and the second cladding layer each independently comprise one or more selected from phosphates, pyrophosphates, and oxides; more optionally, the first cladding layer comprises one or more selected from phosphates and oxides, and the second cladding layer comprises one or more selected from pyrophosphates and oxides.

In some embodiments, the cladding amount of the shell cladding the compound represented by formula (II) is 0.005wt% to 1wt%, optionally 0.01wt% to 0.5wt%, based on the weight of the inner core.

In some embodiments, the thickness of the shell cladding the compound represented by formula (II) is 2nm to 200nm, and optionally 5nm to 50nm.

In some embodiments, the first positive electrode active material comprises a compound represented by formula (III),

Li₁₊ₚ₁A²_{q1}B²ᵣ₁Oₛ₁ (III)

0.05≤p1<0.2, 0.10<q1≤0.95, 0≤r1≤0.2, and 2≤s1<3, A² includes one or more elements selected from Co, Ni, Mn and Al; and B² includes one or more elements selected from Mg, Ti, Cr, Zr, Nb, Fe, Mo, Cu, Sb, V, P and F.

In some embodiments, the first positive electrode active material comprises an inner core and a shell cladding the inner core, and the inner core comprises the compound represented by formula (III); the shell comprises one or more cladding layers; and each cladding layer has ionic conductivity and/or electronic conductivity.

In some embodiments, the one or more cladding layers in the shell cladding the compound represented by formula (III) independently comprise one or more selected from phosphates, pyrophosphates, solid electrolytes, conductive polymers, and materials capable of reversibly (de)intercalating lithium ions.

In some embodiments, the cladding amount of the shell cladding the compound represented by formula (III) is 0.1wt% to 5wt%, optionally 0.5wt% to 2wt%, based on the weight of the inner core.

In some embodiments, the thickness of the shell cladding the compound represented by formula (III) is 2nm to 200nm, and optionally 5nm to 50nm.

In some embodiments, the first positive electrode active material comprises a compound represented by formula (IV),

LiMnₜ₁A³₂₋ₜ₁O₄ (IV)

t1 is selected from the range of 0 to 2, and A³ includes one or more elements selected from Ni, Cr, Al, Zr, V, Ti, Mo, Ru, Mg, Nb, Ba, Si, P, W, Co, Cu and Zn.

In some embodiments, the third positive electrode active material comprises an inner core and a shell cladding the inner core, and the inner core comprises the compound represented by formula (IV); the shell comprises one or more cladding layers; and each cladding layer has ionic conductivity and/or electronic conductivity.

In some embodiments, the one or more cladding layers in the shell cladding the compound represented by formula (IV) independently comprise one or more selected from phosphates, pyrophosphates, solid electrolytes, conductive polymers, and materials capable of reversibly (de)intercalating lithium ions. Optionally, the shell or one or more cladding layers cladding the compound represented by formula (IV) independently comprise one or more selected from lithium boron oxide glass, carbonates, carbon metal composites, metal oxides (such as MgO, Al₂O₃, LiAlO₂), silicon oxide, KMnF₃ and LiCoO₂, acetylacetone, and conductive polymers.

In some embodiments, the cladding amount of the shell cladding the compound represented by formula (IV) is 0.1wt% to 3wt%, optionally 0.2wt% to 1.5wt%, based on the weight of the inner core.

In some embodiments, the thickness of the shell cladding the compound represented by formula (IV) is 2nm to 200nm, and optionally 5nm to 50nm.

The first positive electrode active material and the second positive electrode active material may be prepared by sintering. The shells of the first positive electrode active material and the second positive electrode active material may each be prepared by liquid phase cladding.

### [Positive electrode plate]

The positive electrode plate provided by the embodiments of the present application comprises a positive electrode current collector and a positive electrode film layer provided on at least one surface of the positive electrode current collector, the positive electrode film layer comprises the aforementioned positive electrode active material composition. The positive electrode current collector has two opposite surfaces in its own thickness direction, and the positive electrode film layer is provided on either or both of the opposite surfaces of the positive electrode current collector.

In some embodiments, the content of the positive electrode active material composition in the positive electrode film layer is 50-99.5wt%, optionally 90-99.5wt%, and 95-99.5wt%, based on the total weight of the positive electrode film layer.

In some embodiments, the positive electrode plate satisfies 0.23≤(h₁×N₁)/(CW/PD/10000)<1, optionally, 0.63≤(h₁×N₁)/(CW/PD/10000)≤0.87, where h₁ represents the average size of the first positive electrode active material particles along the thickness direction of the positive electrode film layer, in µm; N₁ represents the number of first positive electrode active material particles accommodated in the positive electrode film layer along the thickness direction of the positive electrode film layer; CW represents the areal density of the positive electrode film layer, in g/cm²; and PD represents the compacted density of the positive electrode film layer, in g/cm³. This allows the battery to have a long cycle life.

The above parameters (e.g., h₁, N₁, CW, PD) all refer to the parameters of the positive electrode film layer on one side of the positive electrode current collector.

In some embodiments, along the thickness direction of the positive electrode film layer, the average size h1 of the first positive electrode active material particles is 0.5-20µm, and optionally 2.8-9.2µm.

In some embodiments, along the thickness direction of the positive electrode film layer, the number N₁ of the first positive electrode active material particles accommodated in the positive electrode film layer is 5-25, optionally 6-20, and optionally 6-18.

Along the thickness direction of the positive electrode film layer, the number N₁ of the first positive electrode active material particles and the average size h₁ of the first positive electrode active material particles can be tested by the ion polishing cross-section method. For example, the test can be performed by the following method: using the ion polishing section method, taking a cross section of the positive electrode plate, taking at least 5 reference lines perpendicular to the current collector under a scanning electron microscope, counting the number of first positive electrode active material particles on each reference line, taking an average value, which is the number N₁ of the first positive electrode active material particles along the thickness direction of the positive electrode film layer; counting the particle sizes of the first positive electrode active material particles on each reference line, taking an average value, which is the average size h₁ of the first positive electrode active material particles along the thickness direction of the positive electrode film layer.

In some embodiments, the areal density CW of the positive electrode film layer is 0.01-0.05g/cm², optionally 0.015-0.035g/cm².

In some embodiments, the compacted density PD of the positive electrode film layer is 1.8-3.6g/cm³, optionally 2.0-3.4g/cm³.

The areal density and compacted density of the positive electrode film layer have meanings well-known in the art, and optionally tested by methods known in the art. Compacted density of positive electrode film layer = areal density of positive electrode film layer/thickness of positive electrode film layer. The thickness of the positive electrode film layer has a meaning well known in the art, and can be tested by methods known in the art, such as using a micrometer (e.g., Mitutoyo 293-100, with an accuracy of 0.1 µm). The areal density of the positive electrode film layer has a meaning well known in the art, and can be tested by methods known in the art. For example, a single-sided applied and cold-pressed positive electrode plate can be taken (if it is a double-sided applied positive electrode plate, the positive electrode film layer on one side can be wiped off first), punched into small discs with an area of S₁, weighed, and the weight is denoted as M₁. Then, the positive electrode film layer of the weighed positive electrode plate is wiped off, and the weight of the positive electrode current collector is weighed and denoted as M₀. Areal density of positive electrode plate = (M₁-M₀)/S₁.

In some embodiments, the positive electrode plate also satisfies 0.5≤α₁+(PD/ρ₁)≤1.5, where α₁ represents the porosity of the positive electrode film layer. This allows the battery to have a long cycle life and/or a high energy density.

In some embodiments, the porosity α₁ of the positive electrode film layer is 0.28-0.50, optionally 0.30-0.39.

The porosity of the positive electrode film layer has a meaning well known in the art, and can be tested by methods known in the art. An exemplary test method is as follows: taking a single-sided applied and cold-pressed positive electrode plate (if it is a double-sided applied positive electrode plate, the positive electrode film layer on one side can be wiped off first), punching it into small disc samples of a certain area, and calculating the apparent volume V₁ of the positive electrode plate, V₁=S×H×A, where S represents the sample area, H represents the sample thickness, and A represents the number of samples; with reference to GB/T24586-2009, with an inert gas (such as helium) as the medium, measuring the true volume V₂ of the positive electrode plate by the gas replacement method using a true density tester. Porosity of positive electrode film layer = (V₁-V₂)/V₁×100%. The testing instrument may be a Micromeritics AccuPyc II 1340 true density tester.

In some embodiments, based on the total mass of the positive electrode active material composition, the mass proportion of the first positive electrode active material is denoted as W₁, the mass proportion of the second positive electrode active material is denoted as W₂, the powder compacted density of the first positive electrode active material at 30000N is denoted as P₁, and the powder compacted density of the second positive electrode active material at 30000N is denoted as P₂, both in g/cm³, then PD/[(P₁×W₁)+(P₂×W₂)] is 89% or more, and optionally 92% or more. (P₁×W₁)+(P₂×W₂) can represent the theoretical powder compacted density of the positive electrode active material composition, and PD/[(P₁×W₁)+(P₂×W₂)] can represent the compacted density efficiency of the positive electrode plate.

In some embodiments, the positive electrode current collector may be a metal foil or a composite current collector. For example, as the metal foil, an aluminum foil can be used. The composite current collector may comprise a polymer material substrate layer and a metal layer formed on at least one surface of the polymer material substrate layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene (PP), polyethylene terephthalate (PET), polybutylene terephthalate (PBT), polystyrene (PS), or polyethylene (PE)).

In some embodiments, the positive electrode film layer further optionally comprises a binder. By way of example, the binder can include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer further optionally comprises a conductive agent. By way of example, the conductive agent can include at least one of superconducting carbon, acetylene black, carbon black, Ketjen black, carbon dots, carbon nanotubes, graphene, and carbon nanofibers.

In some embodiments, the positive electrode plate can be prepared as follows: disperse the above components for preparing the positive electrode plate, such as the positive electrode active material, the conductive agent, the binder, and any other component, in a solvent (such as N-methyl pyrrolidone) to form a positive electrode slurry; and coat the positive electrode current collector with the positive electrode slurry, and perform drying, cold pressing and other processes to obtain the positive electrode plate.

### [Negative electrode plate]

In some embodiments, the negative electrode plate comprises a negative electrode current collector and a negative electrode film layer provided on at least one surface of the negative electrode current collector, and the negative electrode film layer comprises a negative electrode active material.

As an example, the negative electrode current collector has two surfaces opposite to each other in the thickness direction of the negative electrode current collector, and the negative electrode film layer is provided on either or both of the two opposite surfaces of the negative electrode current collector.

In some embodiments, the negative electrode current collector may be a metal foil or a composite current collector. For example, a copper foil can be adopted as the metal foil. The composite current collector may include a high molecular material substrate layer and a metal layer formed on at least one surface of the high molecular material substrate. The composite current collector can be formed by forming a metal material (e.g., copper, copper alloy, nickel, nickel alloy, titanium, titanium alloy, silver and silver alloy, etc.) on the high molecular material substrate (e.g., polypropylene (PP), polyethylene terephthalate (PET), polybutylene terephthalate (PBT), polystyrene (PS), polyethylene (PE), etc.).

In some embodiments, the negative electrode active material can be a material well known in the art. As an example, the negative active material may include at least one of the following materials: artificial graphite, natural graphite, soft carbon, hard carbon, a silicon-based material, a tin-based material, lithium titanate, and the like. The silicon-based material can include at least one of monatomic silicon, a silicon-oxygen compound, a silicon-carbon compound, a silicon-nitrogen compound and a silicon alloy. The tin-based material can include at least one of monatomic tin, a tin-oxygen compound and a tin alloy. However, the present application is not limited to these materials, and other conventional materials useful as negative electrode active materials can also be used. Only one of these negative electrode active materials may be used alone, or more than two thereof may be used in a combination.

In some embodiments, the negative electrode film layer further optionally comprises a binder. As an example, the binder can include at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode film layer further optionally comprises a conductive agent. As an example, the conductive agent may include at least one of superconducting carbon, acetylene black, carbon black, Ketjen black, carbon dot, carbon nanotube, graphene, and carbon nanofiber.

In some embodiments, the negative electrode film layer further optionally comprises other auxiliaries, for example, a thickener (such as sodium carboxymethyl cellulose (CMC)).

In some embodiments, the negative electrode plate can be prepared as follows: disperse the above components for preparing the negative electrode plate, such as the negative electrode active material, the conductive agent, the binder and any other component into a solvent (such as deionized water) to form a negative electrode slurry; and coat the negative electrode current collector with the negative electrode slurry, and perform processes of drying, cold pressing and the other processes to obtain the negative electrode plate.

In some embodiments, the negative electrode plate may also not comprise a negative electrode active material capable of (de)intercalating lithium ions. For example, the negative electrode plate may comprise a lithium sheet or a lithium alloy sheet; or, the negative electrode plate may comprise a mesh or foam-like three-dimensional skeleton layer; or, the negative electrode plate may comprise a negative current collector and a lithium-containing layer provided on at least one surface of the negative electrode current collector.

### [Electrolyte]

The electrolyte serves to conduct ions between the positive electrode plate and the negative electrode plate. The type of the electrolyte is not specifically limited in the present application and can be selected according to requirements. For example, the electrolyte can be liquid, gelled, or all solid.

In some embodiments, the electrolyte is liquid (also known as electrolyte solution) and comprises an electrolyte salt and a solvent.

In some embodiments, the electrolyte salt can include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoroborate, lithium bis(oxalate)borate, lithium difluorooxalate phosphate and lithium tetrafluoroborate.

In some embodiments, the solvent can include at least one of ethylene carbonate, propylene carbonate, methyl ethyl carbonate, diethyl carbonate, dimethyl carbonate, dipropyl carbonate, methyl propyl carbonate, ethyl propyl carbonate, butyl carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, tetramethylene sulfone, dimethyl sulfolane, methyl ethyl sulfone and ethyl sulfone.

**In** some embodiments, the electrolyte solution also optionally comprises additives. As an example, the additive can include a negative electrode film-forming additive and a positive electrode film-forming additive and can further include additives that can improve some properties of the battery, for example, an additive that improves the overcharging performance of the battery and an additive that improves the high- or low-temperature performance of the battery.

### [Separator]

In some embodiments, the battery cell also comprises a separator. The type of the separator is not particularly limited in the present application, and any well-known separator with a porous structure having good chemical stability and mechanical stability can be selected.

In some embodiments, the separator comprises a porous substrate. The material of the porous substrate can include at least one of glass fiber, non-woven fabric, polyethylene, polypropylene, polyvinylidene fluoride, polytetrafluoroethylene, polyester and polyimide. The porous substrate can be either a single-layer film or a multilayer composite film without special limitations. When the porous substrate is a multilayer composite film, the materials of the layers can be the same or different without special limitations.

In some embodiments, the separator may further comprise a coating located on at least one surface of the porous substrate. Optionally, the coating comprises one or more of inorganic heat resistant particles and organic heat resistant particles.

The present application further provides an electrical apparatus, comprising at least one of the battery cell, battery module, or battery pack provided in the present application. The battery cell, the battery module, or the battery pack may be used as a power source of the electrical apparatus, or may be used as an energy storage unit of the electrical apparatus. The electrical apparatus may include, but is not limited to, a mobile device (such as a mobile phone or a laptop), an electric vehicle (such as an all-electric vehicle, a hybrid electric vehicle, a plug-in hybrid electric vehicle, an electric bicycle, an electric scooter, an electric golf cart, or an electric truck), an electric train, a ship, a satellite, or an energy storage system.

The electrical apparatus may select the battery cell, the battery module, or the battery pack according to use requirements thereof.

FIG. 6 shows an electrical apparatus as an example. The electrical apparatus is an all-electric vehicle, a hybrid electric vehicle, a plug-in hybrid electric vehicle, or the like. In order to meet the requirements of the electrical apparatus for high power and high energy density, a battery pack or a battery module may be used.

As another example, the electrical apparatus may be a mobile phone, a tablet personal computer, a laptop, etc. The electrical apparatus is generally required to be thin and light, and may use a battery cell as a power source.

### Examples

The following Examples more specifically describe the contents disclosed in the present application. These Examples are intended for illustrative purposes only, because various modifications and changes made within the scope of the contents disclosed in the present application are apparent to those skilled in the art. Unless otherwise stated, all parts, percentages, and ratios reported in the following Examples are based on mass, all reagents used in the Examples are either commercially available or synthesized according to conventional methods, and may be directly used without further treatment, and all the instruments used in the Examples are commercially available.

**The batteries in Examples 1-14 and Comparative Examples 1-6 are all prepared according to a method below.**

### Preparation of positive electrode plate

The first positive electrode active material and second positive electrode active material shown in Table 1, conductive agent acetylene black, and binder polyvinylidene fluoride (PVDF) in a mass ratio of 96:2:2 were fully stirred and mixed in an appropriate amount of solvent NMP to form a homogeneous positive electrode slurry; the positive electrode slurry was uniformly coated onto two surfaces of the positive electrode current collector aluminum foil, dried and cold pressed to give a positive electrode plate. The areal density CW of the positive electrode film layer on one side of the positive electrode current collector is 0.0196 g/cm².

### Preparation of negative electrode plate

Graphite as negative electrode active material, styrene butadiene rubber (SBR) as binder, carboxymethyl cellulose sodium (CMC-Na) as thickener, and carbon black (Super P) as conductive agent in a weight ratio of 96.2:1.8:1.2:0.8 were sufficiently stirred and mixed in an appropriate amount of deionized water as solvent to form a homogeneous negative electrode slurry; and the negative electrode slurry was uniformly coated onto the surface of the negative electrode current collector copper foil, dried, and cold pressed to give a negative electrode plate.

### Preparation of electrolyte solution

Ethylene carbonate (EC), ethyl methyl carbonate (EMC), and diethyl carbonate (DEC) were mixed in a volume ratio of 1:1:1 to obtain an organic solvent, and then fully dried LiPF₆ was dissolved in above organic solvent to prepare an electrolyte solution with a concentration of 1mol/L.

### Preparation of separator

A porous polyethylene film was used as the separator.

### Preparation of battery

The positive electrode plate, the separator, and the negative electrode plate were stacked and wound in sequence to give an electrode assembly; the electrode assembly was placed in an outer package; after drying, the electrolyte solution was injected thereto, and the system underwent processes such as vacuum encapsulation, standing, formation, and shaping to give a battery.

### Testing section

At 25°C, the battery was charged at a constant current of 0.5C to 4.2V, and then charged at a constant voltage until the current was 0.05C. At this point, the battery was fully charged, and the charge capacity at this moment was recorded as the charge capacity at cycle 1. After the battery was left to stand for 5min, it was discharged at a constant current of 0.5C to 2.8V. This is one cycle of charge and discharge. The discharge capacity at this moment was recorded as the discharge capacity at cycle 1. The battery was subjected to a cyclic charge-discharge test by the above approach, the discharge capacity after each cycle was recorded until the discharge capacity fade of the battery was 80% of the discharge capacity at cycle 1, and the number of cycles at this moment represents the cycling performance of the battery. The higher the number of cycles of the battery, the better its service life.

In Tables 1 and 2, NCM811 refers to LiNi_{0.8}Co_{0.1}Mn_{0.1}O₂, LCO refers to LiCoO₂, and LMFP refers to carbon-cladded LiMn_{0.60}Fe_{0.40}PO₄.

The NCM811, LCO and LMFP in each of the Examples and Comparative Examples can be purchased commercially, and then a variety of commercially available materials were screened by selecting a suitable sieve and then mixed in a predetermined ratio to obtain the material; or, the commercially available materials were first ball-milled to a suitable size, screened by selecting a suitable sieve, and then mixed in a predetermined ratio to obtain the material; or, sintering method was adopted and the sintering process parameters (such as sintering temperature, sintering time, sintering atmosphere and the like) and grinding parameters (such as grinding speed, grinding time and the like) were adjusted, and a suitable sieve was selected for screening to obtain the material; or, a variety of materials of different sizes prepared by sintering method were mixed in a predetermined ratio to obtain the material.

The ratios of the major axis length to the minor axis length of the first positive electrode active material and the second positive electrode active material in Table 1 are both between 1 and 1.4, which can be obtained by adjusting grinding parameters (such as grinding speed, grinding time and the like).

Dv10₍₁₎ and Dv50₍₁₎ are volume distribution particle sizes of the first positive electrode active material, ρ₁ is the true density of the first positive electrode active material, and P₁ is the powder compacted density of the first positive electrode active material at 30000N.

Dv50₍₂₎ is the volume distribution particle size of the second positive electrode active material, ρ₂ is the true density of the second positive electrode active material, and P₂ is the powder compacted density of the second positive electrode active material at 30000N.

W₁ is the mass proportion of the first positive electrode active material based on the total mass of the positive electrode active material composition.

W₂ is the mass proportion of the second positive electrode active material based on the total mass of the positive electrode active material composition, and W₂=ρ₂/[(β×ρ₁)+ρ₂].

In the particle size distribution curve of the positive electrode active material composition, the integral area of peak I represents the integral area of the peak with the smallest volume distribution particle size, and the integral area of peak II represents the total integral area of the other peaks other than peak I.

h₁ represents the average size of the first positive electrode active material particles along the thickness direction of the positive electrode film layer.

N₁ represents the number of the first positive electrode active material particles accommodated in the positive electrode film layer along the thickness direction of the positive electrode film layer.

PD represents the compacted density of the positive electrode film layer.

α₁ represents the porosity of the positive electrode film layer.

Compacted density efficiency of positive electrode plate = PD/[(P₁×W₁)+(P₂×W₂)].

The above parameters can be measured according to the test methods given above.

From Table 1 and Table 2, it can be seen that when the first positive electrode active material and the second positive electrode active material simultaneously satisfy Dv10₍₁₎/Dv50₍₂₎> 1, Dv50₍₁₎/Dv50₍₂₎≥1.4 and -2.0≤1 - [(ρ₂×W₂)/(ρ₁×W₁)]≤0.98, the positive electrode plate using the positive electrode active material composition can have both a high compacted density and a high compacted density efficiency, and the battery using the positive electrode active material composition can have a high energy density and a long service life.

The preparation methods of the batteries of Examples 15-19 are similar to that of Example 5, except that the types of the second positive electrode active materials are different, as shown in Table 3 for details. The test results are shown in Table 4.

The second positive electrode active material of Examples 15-19 can be obtained by sintering method and by adjusting sintering process parameters (such as sintering temperature, sintering time, sintering atmosphere and the like), grinding parameters (such as grinding speed, grinding time and the like), and selecting a suitable sieve for screening; or, by mixing a plurality of materials of different particle sizes prepared by sintering method in a predetermined proportion. The ratios of the major axis length to the minor axis length of the second positive electrode active materials used in Examples 15 to 19 are all between 1 and 1.4.

From Tables 3 and 4, it can be seen that by doping specific elements at the Mn site and further at the Li site, P site and/or O site of LiMnPO₄, optionally doping specific elements at the Mn site and P site of LiMnPO₄, or more optionally at the Li site, Mn site, P site and O site of LiMnPO₄, it can further improve the cycling performance of the battery.

It should be noted that the present application is not limited to the above embodiments. The above embodiments are only examples, and embodiments that have the same composition and exert the same effect as the technical ideas within the scope of the technical solution of the present application are included in the technical scope of the present application. In addition, without departing from the scope of the subject matter of the present application, various modifications that can be conceived of by those skilled in the art and are applied to the embodiments, and other embodiments constructed by combining some of the constituent elements of the embodiments are also encompassed within the scope of the present application.

**Table 1**

| No. | First positive electrode active material | | | | | | Second | | positive electrode active material | | |
|---|---|---|---|---|---|---|---|---|---|---|---|
| | Type | Dv10₍₁₎ (µm) | Dv50_{(1 )} (µm) | Powder compacted density P₁ (g/cm³) | True density ρ₁ (g/cm³) | Mass proportion W₁ | Type | Dv50 ₍₂₎ (µm) | Powder compacted density P₂ (g/cm³) | True density ρ₂ (g/cm³) | Mass proportion W₂ |
| Example 1 | NCM8 11 | 6.6 | 12 | 3.53 | 4.70 | 85% | LMF P | 0.4 | 2.25 | 3.53 | 15% |
| Example 2 | NCM8 11 | 4.5 | 9.5 | 3.51 | 4.67 | 85% | LMF P | 0.4 | 2.25 | 3.53 | 15% |
| Example 3 | NCM8 11 | 1.6 | 3.4 | 3.38 | 4.70 | 85% | LMF P | 0.4 | 2.25 | 3.53 | 15% |
| Example 4 | NCM8 11 | 1.6 | 3.4 | 3.38 | 4.70 | 85% | LMF P | 0.6 | 2.28 | 3.56 | 15% |
| Example 5 | NCM8 11 | 1.6 | 3.4 | 3.38 | 4.70 | 85% | LMF P | 1.5 | 2.35 | 3.58 | 15% |
| Example 6 | NCM8 11 | 2.1 | 2.8 | 3.35 | 4.70 | 85% | LMF P | 2 | 2.41 | 3.58 | 15% |
| Example 7 | NCM8 11 | 1.6 | 3.4 | 3.38 | 4.70 | 90% | LMF P | 1.5 | 2.35 | 3.58 | 10% |
| Example 8 | NCM8 11 | 1.6 | 3.4 | 3.38 | 4.70 | 70% | LMF P | 1.5 | 2.35 | 3.58 | 30% |
| Example 9 | NCM8 11 | 1.6 | 3.4 | 3.38 | 4.70 | 60% | LMF P | 1.5 | 2.35 | 3.58 | 40% |
| Example 10 | NCM8 11 | 1.6 | 3.4 | 3.38 | 4.70 | 50% | LMF P | 1.5 | 2.35 | 3.58 | 50% |
| Example 11 | NCM8 11 | 1.6 | 3.4 | 3.38 | 4.70 | 40% | LMF P | 1.5 | 2.35 | 3.58 | 60% |
| Example 12 | NCM8 11 | 1.6 | 3.4 | 3.38 | 4.70 | 30% | LMF P | 1.5 | 2.35 | 3.58 | 70% |
| Example 13 | LCO | 2.8 | 3.9 | 3.91 | 5.09 | 80% | LMF P | 0.4 | 2.25 | 3.53 | 20% |
| Example 14 | LCO | 2.8 | 3.9 | 3.91 | 5.09 | 80% | LMF P | 2 | 2.41 | 3.58 | 20% |
| Comparati ve Example 1 | NCM8 11 | 4.5 | 9.5 | 3.51 | 4.67 | 100% | \ | \ | \ | \ | \ |
| Comparati ve Example 2 | \ | \ | \ | \ | \ | \ | LMF P | 0.4 | 2.25 | 3.53 | 100% |
| Comparati ve Example 3 | NCM8 11 | 2.1 | 2.8 | 3.35 | 4.70 | 85% | LMF P | 3.1 | 2.31 | 3.57 | 15% |
| Comparati ve Example 4 | NCM8 11 | 0.3 | 1.5 | 3.14 | 4.66 | 85% | LMF P | 0.4 | 2.25 | 3.53 | 15% |
| Comparati ve Example 5 | LCO | 2.8 | 3.9 | 3.91 | 5.09 | 80% | LMF P | 7.8 | 2.21 | 3.40 | 20% |
| Comparati ve Example 6 | NCM8 11 | 1.6 | 3.4 | 3.38 | 4.70 | 20% | LMF P | 1.5 | 2.35 | 3.58 | 80% |

**Table 2**

| No. | Dv10_{(1 )}/Dv50 ₍₂₎ | Dv50_{(1 )}/Dv50 ₍₂₎ | 1-[(ρ₂× W₂)/ (ρ₁×W ₁)] | β | Particle size distribution curve of positive electrode active material compositi on | Positive electrode plate | | | | | | | | Cycle life (cycles) |
|---|---|---|---|---|---|---|---|---|---|---|---|---|---|---|
| | | | | | Peak I integral area: Peak II integral area | First positive electrod e active material particles' average size h₁ (µm) | First positiv e electro de active materi al particl es' numbe r N₁ | Positive electrod e film layer's compact ed density PD (g/cm³) | Positive electrod e active material composit ion's theoretic al compact ed density (g/cm³) | Compac ted density efficien cy | (h₁×N₁ )/(CW /PD/1 0000) | Porosi ty α₁ | α₁+(P D/ρ₁) | |
| Example 1 | 16.5 | 30.0 | 0.87 | 4.3 | 0.016:1 | 9.2 | 6 | 3.08 | 3.34 | 92% | 0.87 | 0.32 | 0.98 | 1800 |
| Example 2 | 11.3 | 23.8 | 0.87 | 4.3 | 0.011:1 | 8.9 | 6 | 3.16 | 3.32 | 95% | 0.86 | 0.30 | 0.98 | 1700 |
| Example 3 | 4.0 | 8.5 | 0.87 | 4.3 | 0.077:1 | 3.2 | 16 | 3.04 | 3.21 | 95% | 0.79 | 0.33 | 0.98 | 1800 |
| Example 4 | 2.7 | 5.7 | 0.87 | 4.3 | 0.094:1 | 3.1 | 17 | 3.05 | 3.22 | 95% | 0.82 | 0.33 | 0.98 | 1800 |
| Example 5 | 1.07 | 2.3 | 0.87 | 4.3 | 0.15:1 | 3.3 | 16 | 3.14 | 3.23 | 97% | 0.85 | 0.31 | 0.98 | 2100 |
| Example 6 | 1.05 | 1.4 | 0.87 | 4.3 | 0.27:1 | 2.8 | 20 | 2.85 | 3.21 | 89% | 0.81 | 0.37 | 0.98 | 2200 |
| Example 7 | 1.07 | 2.3 | 0.92 | 6.9 | 0.12:1 | 3.3 | 16 | 3.16 | 3.28 | 96% | 0.85 | 0.31 | 0.98 | 1800 |
| Example 8 | 1.07 | 2.3 | 0.67 | 1.8 | 0.33:1 | 3.2 | 13 | 2.98 | 3.07 | 97% | 0.63 | 0.32 | 0.95 | 2100 |
| Example 9 | 1.07 | 2.3 | 0.49 | 1.1 | 0.52:1 | 3.4 | 11 | 2.88 | 2.97 | 97% | 0.55 | 0.32 | 0.93 | 2200 |
| Example 10 | 1.07 | 2.3 | 0.24 | 0.8 | 0.81:1 | 3.3 | 9 | 2.78 | 2.87 | 97% | 0.42 | 0.33 | 0.92 | 2000 |
| Example 11 | 1.07 | 2.3 | -0.14 | 0.5 | 1.30:1 | 3.1 | 8 | 2.63 | 2.76 | 95% | 0.33 | 0.35 | 0.91 | 1700 |
| Example 12 | 1.07 | 2.3 | -0.78 | 0.3 | 1.81:1 | 3.2 | 6 | 2.38 | 2.66 | 90% | 0.23 | 0.39 | 0.90 | 1500 |
| Example 13 | 7.00 | 9.8 | 0.83 | 2.8 | 0.034:1 | 3.8 | 12 | 3.22 | 3.58 | 90% | 0.75 | 0.33 | 0.96 | 1200 |
| Example 14 | 1.40 | 2.0 | 0.82 | 2.8 | 0.20:1 | 3.7 | 12 | 3.32 | 3.61 | 92% | 0.75 | 0.31 | 0.96 | 1500 |
| Comparati ve Example 1 | \ | \ | \ | \ | \ | \ | \ | 3.20 | 3.51 | 91% | \ | 0.33 | 1.02 | 1500 |
| Comparati ve Example 2 | \ | \ | \ | \ | \ | \ | \ | 1.95 | 2.25 | 87% | \ | 0.41 | \ | 2000 |
| Comparati ve Example 3 | 0.68 | 0.9 | 0.87 | 4.3 | 0.47:1 | 3.1 | 18 | 2.80 | 3.19 | 88% | 0.80 | 0.38 | 0.98 | 700 |
| Comparati ve Example 4 | 0.75 | 3.8 | 0.87 | 4.3 | 3.82:1 | 1.5 | 39 | 2.40 | 3.01 | 80% | 0.72 | 0.47 | 0.99 | 500 |
| Comparati ve Example 5 | 0.36 | 0.5 | 0.83 | 2.7 | 0.008:1 | 3.7 | 12 | 3.03 | 3.57 | 85% | 0.69 | 0.34 | 0.94 | 900 |
| Comparati ve Example 6 | 1.07 | 2.3 | -2.05 | 0.2 | 2.52:1 | 3.4 | 4 | 2.24 | 2.56 | 88% | 0.16 | 0.41 | 0.89 | 950 |

**Table 3**

| No. | Second positive electrode active material | | | | |
|---|---|---|---|---|---|
| | Type | Dv50₍₂₎ (µm) | Powder compacted density P₂ (g/cm³) | True density ρ₂ (g/cm³) | Mass proportion W₂ |
| Example 5 | LiMn_{0.60}Fe_{0.40}PO₄/C | 1.5 | 2.35 | 3.58 | 15% |
| Example 15 | Li_{0.999}Mn_{0.60}Fe_{0.40}P_{0.999}S_{0.001}O₄/C | 1.5 | 2.37 | 3.58 | 15% |
| Example 16 | Li_{0.999}Mn_{0.60}Fe_{0.393}V_{0.007}P_{0.999}S_{0.001}O₄/C | 1.5 | 2.38 | 3.58 | 15% |
| Example 17 | Li_{0.999}Mn_{0.60}Fe_{0.393}V_{0.004}Co_{0.003}P_{0.999}S_{0.001}O₄/C | 1.5 | 2.38 | 3.58 | 15% |
| Example 18 | Li_{0.988}Mg_{0.005}Mn_{0.60}Fe_{0.35}V_{0.05}P_{0.999}S_{0.001}O_{3.999}F_{0.001}/C | 1.5 | 2.39 | 3.56 | 15% |
| Example 19 | Li_{0.984}Mg_{0.005}Mn_{0.60}Fe_{0.25}V_{0.05}Co_{0.10}P_{0.999}S_{0.001}O_{3.995}F_{0.005}/C | 1.5 | 2.39 | 3.58 | 15% |

**Table 4**

| No. | Dv10_{(1 )}/Dv50 ₍₂₎ | Dv50_{(1 )}/Dv50_{( 2)} | 1-[(ρ₂×W ₂)/ (ρ₁×W₁ )] | β | Particle size distribution curve of positive electrode active material composition | Positive electrode plate | | | | | | | | Cycle life (cycles) |
|---|---|---|---|---|---|---|---|---|---|---|---|---|---|---|
| | | | | | Peak I integral area: Peak II integral area | First positiv e electro de active materia 1 particle s' averag e size h₁ (µm) | First positive electrode active material particles' number N₁ | Positive electrode film layer's compact ed density PD (g/cm³) | Positive electrode active material compositio n's theoretical compacted density (g/cm³) | Compact ed density efficiency | (h₁×N₁ )/(CW/ PD/10 000) | Porosi ty α₁ | α₁+(P D/ρ₁) | |
| Exampl e 5 | 1.07 | 2.3 | 0.87 | 4.3 | 0.15:1 | 3.3 | 16 | 3.14 | 3.23 | 97% | 0.85 | 0.31 | 0.98 | 2100 |
| Exampl e 15 | 1.07 | 2.3 | 0.87 | 4.3 | 0.15:1 | 3.4 | 15 | 3.15 | 3.23 | 98% | 0.82 | 0.31 | 0.98 | 2150 |
| Exampl e 16 | 1.07 | 2.3 | 0.87 | 4.3 | 0.16:1 | 3.2 | 16 | 3.14 | 3.23 | 97% | 0.82 | 0.31 | 0.98 | 2250 |
| Exampl e 17 | 1.07 | 2.3 | 0.87 | 4.3 | 0.16:1 | 3.4 | 15 | 3.14 | 3.23 | 97% | 0.82 | 0.31 | 0.98 | 2310 |
| Exampl e 18 | 1.07 | 2.3 | 0.87 | 4.3 | 0.15:1 | 3.3 | 15 | 3.15 | 3.23 | 98% | 0.80 | 0.31 | 0.98 | 2350 |
| Exampl e 19 | 1.07 | 2.3 | 0.87 | 4.3 | 0.16:1 | 3.4 | 15 | 3.14 | 3.23 | 97% | 0.81 | 0.31 | 0.98 | 2330 |

## Claims

1. A positive electrode active material composition, wherein
the positive electrode active material composition comprises a first positive electrode active material and a second positive electrode active material having different crystal form from the first positive electrode active material, and the second positive electrode active material comprises a phosphate material,
the volume distribution particle size Dv10₍₁₎ of the first positive electrode active material and the volume distribution particle size Dv50₍₂₎ of the second positive electrode active material satisfy Dv10₍₁₎/Dv50₍₂₎>1,
the volume distribution particle size Dv50₍₁₎ of the first positive electrode active material and the volume distribution particle size Dv50₍₂₎ of the second positive electrode active material satisfy Dv50₍₁₎/Dv50₍₂₎≥1.4,
the true density of the first positive electrode active material is denoted as ρ₁, and the true density of the second positive electrode active material is denoted as ρ₂, both in g/cm³, and based on the total mass of the positive electrode active material composition, the mass proportion of the first positive electrode active material is denoted as W₁, and the mass proportion of the second positive electrode active material is denoted as W₂, then the positive electrode active material composition satisfies -2.0≤1 - [(ρ₂×W₂)/(ρ₁×W₁)]≤0.98.

2. The positive electrode active material composition according to claim 1, wherein
1<Dv10₍₁₎/Dv50₍₂₎≤16.5, optionally, 1.07≤Dv10₍₁₎/Dv50₍₂₎≤11.3; and/or,
1.4<Dv50₍₁₎/Dv50₍₂₎≤30.0, optionally, 2.0≤Dv50₍₁₎/Dv50₍₂₎≤23.8; and/or,
-0.78≤1 - [(ρ₂×W₂)/(ρ₁×W₁)]≤0.96, optionally, -0.14≤1 - [(ρ₂×W₂)/(ρ₁×W₁)]≤0.92, more optionally, 0.67≤1 - [(ρ₂×W₂)/(ρ₁×W₁)]≤0.92.

3. The positive electrode active material composition according to claim 1 or 2, wherein W₂=ρ₂/[(β×ρ₁)+ρ₂], 0.3≤β≤30, optionally, 0.5≤β≤6.9, more optionally, 1.8≤β≤6.9.

4. The positive electrode active material composition according to any one of claims 1 to 3, wherein the particle size distribution curve of the positive electrode active material composition has at least two volume distribution peaks, the peak with the smallest volume distribution particle size is denoted as peak I, the other peaks other than peak I are denoted as peak II, the volume distribution particle size corresponding to the maximum peak intensity of peak I is between 0.3µm and 2.1µm, the volume distribution particle size corresponding to the maximum peak intensity of peak II is between 3µm and 15µm, and the ratio of the integral area of peak I to the total integral area of peak II is (0.010-2.5):1, optionally (0.011-1.3):1.

5. The positive electrode active material composition according to any one of claims 1 to 4, wherein the particle size distribution curve of the second positive electrode active material has at least two volume distribution peaks, the peak with the smallest volume distribution particle size is denoted as peak III, the other peaks other than peak III are denoted as peak IV, the volume distribution particle size corresponding to the maximum peak intensity of peak III is between 0.3µm and 2.1µm, the volume distribution particle size corresponding to the maximum peak intensity of peak IV is between 2.1µm and 10µm, and the ratio of the integral area of peak III to the total integral area of peak IV is (0.5-20):1.

6. The positive electrode active material composition according to any one of claims 1 to 5, wherein
the ratio of the major axis length to the minor axis length of the first positive electrode active material is 1-2, optionally 1-1.4; and/or,
the ratio of the major axis length to the minor axis length of the second positive electrode active material is 1-2, optionally 1-1.4; and/or,
the volume distribution particle size Dv10₍₁₎ of the first positive electrode active material is 0.3-8µm, optionally 1.6-6.6µm; and/or,
the volume distribution particle size Dv50₍₁₎ of the first positive electrode active material is 1.5-15µm, optionally 3-12µm; and/or,
the volume distribution particle size Dv50₍₂₎ of the second positive electrode active material is 0.25-3µm, optionally 0.4-2µm; and/or,
the true density ρ₁ of the first positive electrode active material is 4.40-5.15g/cm³, optionally 4.60-5.10g/cm³; and/or,
the true density ρ₂ of the second positive electrode active material is 3.20-3.65g/cm³, optionally 3.30-3.60g/cm³; and/or,
based on the total mass of the positive electrode active material composition, the mass proportion W₁ of the first positive electrode active material is 30%-98%, optionally 70%-90%; and/or,
based on the total mass of the positive electrode active material composition, the mass proportion W₂ of the second positive electrode active material is 2%-70%, optionally 10%-30%.

7. The positive electrode active material composition according to any one of claims 1 to 6, wherein the second positive electrode active material comprises a compound represented by formula (I),
LiₐAₓMn_{1-y}B_{y}P_{1.-z}C₂O₄₋ₙDₙ (I)
A includes one or more elements selected from group IA, group IIA, group IIIA, group IIB, group VB and group VIB; B includes one or more elements selected from group IA, group IIA, group IIIA, group IVA, group VA, group IIB, group IVB, group VB, group VIB and group VIII; C includes one or more elements selected from group IIIA, group IVA, group VA and group VIA; D includes one or more elements selected from group VIA and group VIIA; a is selected from the range of 0.85 to 1.15; x is selected from the range of 0 to 0.1; y is selected from the range of 0.001 to 1; z is selected from the range of 0 to 0.5; and n is selected from the range of 0 to 0.5.

8. The positive electrode active material composition according to claim 7, wherein y is selected from the range of 0.001 to 0.999.

9. The positive electrode active material composition according to claim 8, wherein
A includes one or more elements selected from Rb, Cs, Be, Ca, Sr, Ba, Ga, In, Cd, V, Ta, Cr, Zn, Al, Na, K, Mg, Nb, Mo and W, and optionally includes one or more elements selected from Zn, Al, Na, K, Mg, Nb, Mo and W; and/or,
B includes one or more elements selected from Rb, Cs, Be, Ca, Sr, Ba, In, Pb, Bi, Cd, Hf, Ta, Cr, Ru, Rh, Pd, Os, Ir, Pt, Zn, Al, Na, K, Mg, Mo, W, Ti, V, Zr, Fe, Ni, Co, Ga, Sn, Sb, Nb and Ge, and optionally includes one or more elements selected from Zn, Al, Na, K, Mg, Mo, W, Ti, V, Zr, Fe, Ni, Co, Ga, Sn, Sb, Nb and Ge; and/or,
C includes one or more elements selected from B (boron), S, Si and N; and/or,
D includes one or more elements selected from S, F, Cl, and Br.

10. The positive electrode active material composition according to claim 8 or 9, wherein
A includes any element selected from Zn, Al, Na, K, Mg, Nb, Mo and W, and optionally includes any element selected from Mg and Nb; and/or,
B includes one or more elements selected from Ti, V, Zr, Fe, Ni, Mg, Co, Ga, Sn, Sb, Nb and Ge, optionally includes at least two elements selected from Ti, V, Zr, Fe, Ni, Mg, Co, Ga, Sn, Sb, Nb and Ge, more optionally includes at least two elements selected from Fe, Ti, V, Ni, Co and Mg, further optionally includes at least two elements selected from Fe, Ti, V, Co and Mg, and still further optionally includes Fe and one or more elements selected from Ti, V, Co and Mg; and/or,
C includes any element selected from B (boron), S, Si and N, and optionally S; and/or,
D includes any element selected from S, F, Cl, and Br, and optionally F.

11. The positive electrode active material composition according to any one of claims 8 to 10, wherein
a is selected from the range of 0.9 to 1.1, optionally selected from the range of 0.97 to 1.01; and/or,
x is selected from the range of 0.001 to 0.005; and/or,
y is selected from the range of 0.001 to 0.5, optionally selected from the range of 0.01 to 0.5, optionally selected from the range of 0.25 to 0.5; and/or,
z is selected from the range of 0.001 to 0.5, optionally selected from the range of 0.001 to 0.1, and more optionally selected from the range of 0.001 to 0.005; and/or,
n is selected from the range of 0 to 0.1, optionally selected from the range of 0.001 to 0.005.

12. The positive electrode active material composition according to any one of claims 8 to 11, wherein
x is 0, z is selected from the range of 0.001 to 0.5, and n is selected from the range of 0.001 to 0.1; or,
x is selected from the range of 0.001 to 0.1, z is 0, and n is selected from the range of 0.001 to 0.1; or,
x is selected from the range of 0.001 to 0.1, z is selected from the range of 0.001 to 0.5, and n is 0; or,
x is 0, z is 0, and n is selected from the range of 0.001 to 0.1; or,
x is 0, z is selected from the range of 0.001 to 0.5, and n is 0; or,
x is selected from the range of 0.001 to 0.1, z is selected from the range of 0.001 to 0.5, and n is selected from the range of 0.001 to 0.1.

13. The positive electrode active material composition according to any one of claims 8 to 12, wherein y:z is selected from the range of 0.002 to 999, optionally selected from the range of 0.025 to 999 or the range of 0.002 to 500, and more optionally selected from the range of 0.2 to 600.

14. The positive electrode active material composition according to any one of claims 8 to 13, wherein z : n is selected from the range of 0.002 to 500, optionally selected from the range of 0.2 to 100, and more optionally selected from the range of 0.2 to 50.

15. The positive electrode active material composition according to any one of claims 8 to 14, wherein
A includes one or more elements selected from Zn, Al, Na, K, Mg, Nb, Mo and W; B includes one or more elements selected from Ti, V, Zr, Fe, Ni, Mg, Co, Ga, Sn, Sb, Nb and Ge; C includes one or more elements selected from B (boron), S, Si and N; D includes one or more elements selected from S, F, Cl and Br; a is selected from the range of 0.9 to 1.1, x is selected from the range of 0.001 to 0.1, y is selected from the range of 0.001 to 0.5, z is selected from the range of 0.001 to 0.1, and n is selected from the range of 0.001 to 0.1.

16. The positive electrode active material composition according to any one of claims 8 to 14, wherein
B includes one or more elements selected from Zn, Al, Na, K, Mg, Mo, W, Ti, V, Zr, Fe, Ni, Co, Ga, Sn, Sb, Nb and Ge, optionally includes one or more elements selected from Zn, Fe, Ti, V, Ni, Co and Mg; C includes one or more elements selected from B (boron), Si, N and S; a is selected from the range of 0.9 to 1.1, x is 0, y is selected from the range of 0.001 to 0.5, z is selected from the range of 0.001 to 0.1, and n is 0.

17. The positive electrode active material composition according to any one of claims 8 to 16, wherein (1-y):y is in the range of 0.1-999, optionally in the range of 0.1-10 or in the range of 0.67-999, more optionally in the range of 1 to 10, further optionally in the range of 1 to 4, and further optionally in the range of 1.5 to 3; and/or,
a:x is in the range of 1 to 1200, optionally in the range of 9 to 1100, and more optionally in the range of 190-998.

18. The positive electrode active material composition according to any one of claims 8 to 17, wherein z:(1-z) is 1:9 to 1:999, and optionally 1:499 to 1:249.

19. The positive electrode active material composition according to any one of claims 8 to 18, wherein the second positive electrode active material comprises an inner core and a shell cladding the inner core,
the inner core comprises the compound represented by formula (I);
the shell comprises one or more cladding layers; and each cladding layer has ionic conductivity and/or electronic conductivity.

20. The positive electrode active material composition according to claim 19, wherein the one or more cladding layers each independently comprise one or more selected from pyrophosphates, phosphates, carbon, doped carbon, oxides, borides and polymers.

21. The positive electrode active material composition according to claim 19 or 20, wherein
the shell comprises a cladding layer; and optionally, the cladding layer comprises one or more selected from pyrophosphates, phosphates, carbon, doped carbon, oxides, borides and polymers.

22. The positive electrode active material composition according to claim 19 or 20, wherein
the shell comprises a first cladding layer cladding the inner core and a second cladding layer cladding the first cladding layer;
optionally, the first cladding layer and the second cladding layer each independently comprise one or more selected from pyrophosphates, phosphates, carbon, doped carbon, oxides, borides and polymers;
more optionally, the first cladding layer comprises one or more selected from pyrophosphates, phosphates, oxides, and borides, and the second cladding layer comprises one or more selected from carbon and doped carbon.

23. The positive electrode active material composition according to claim 19 or 20, wherein
the shell comprises a first cladding layer cladding the inner core, a second cladding layer cladding the first cladding layer, and a third cladding layer cladding the second cladding layer;
optionally, the first cladding layer, the second cladding layer and the third cladding layer each independently comprise one or more selected from pyrophosphates, phosphates, carbon, doped carbon, oxides, borides and polymers;
more optionally, the first cladding layer comprises pyrophosphates, the second cladding layer comprises one or more selected from phosphates, oxides, and borides, and the third cladding layer comprises one or more selected from carbon and doped carbon.

24. The positive electrode active material composition according to any one of claims 20 to 23, wherein
the pyrophosphate is M_{b}(P₂O₇)_{c}; and/or,
the phosphate is Xₘ(PO₄)_{q}; and/or,
the doping element in the doped carbon includes one or more elements selected from group IIIA, group VA, group VIA and group VIIA; and/or,
the oxide is M'_{d}O_{c}; and/or,
the boride is ZᵥB_{w}; and/or,
the polymer includes one or more selected from polysaccharides and their derivatives, and polysiloxanes;
M, X and Z each independently include one or more elements selected from group IA, group IIA, group IIIA, group IB, group IIB, group IVB, group VB, group VIIB and group VIII;
b is selected from the range of 1 to 4;
c is selected from the range of 1 to 6;
m is selected from the range of 1 to 2;
q is selected from the range of 1 to 4;
M' includes one or more elements selected from alkali metals, alkaline earth metals, transition metals, group IIIA elements, group IVA elements, lanthanides and Sb;
d is greater than 0 and less than or equal to 2;
e is greater than 0 and less than or equal to 5;
v is selected from the range of 1 to 7; and
w is selected from the range of 1 to 2.

25. The positive electrode active material composition according to claim 24, wherein
M, X and Z each independently include one or more elements selected from Li, Fe, Ni, Mg, Co, Cu, Zn, Ti, Ag, Zr, Nb, Mn and Al; and/or,
the doping element in the doped carbon includes one or more selected from nitrogen, phosphorus, sulfur, boron and fluorine; and/or,
M' includes one or more elements selected from Li, Be, B, Na, Mg, Al, Si, P, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La and Ce, and optionally includes one or more elements selected from Mg, Al, Si, Zn, Zr and Sn; and/or,
the polysiloxane is selected from one or more of linear polysiloxanes and cyclic polysiloxanes; and/or,
the polysaccharide is selected from one or more of plant polysaccharides and marine polysaccharides.

26. The positive electrode active material composition according to any one of claims 19 to 20, 22, and 24 to 25, wherein the second positive electrode active material comprises an inner core and a shell cladding the inner core,
the inner core comprises LiₐMn_{1-y}B_{y}P_{1-z}C_{z}O₄, where a is selected from the range of 0.9 to 1.1, y is selected from the range of 0.001 to 0.5, z is selected from the range of 0.001 to 0.1, B includes one or more elements selected from Ti, V, Zr, Fe, Ni, Mg, Co, Ga, Sn, Sb, Nb and Ge, and C includes one or more elements selected from B (boron), S, Si and N;
the shell comprises a first cladding layer cladding the inner core and a second cladding layer cladding the first cladding layer, the first cladding layer comprises pyrophosphate MP₂O₇ and phosphate XPO₄, where M and X each independently include one or more elements selected from Li, Fe, Ni, Mg, Co, Cu, Zn, Ti, Ag, Zr, Nb and Al; and the second cladding layer comprises carbon.

27. The positive electrode active material composition according to any one of claims 19 to 20, and 23 to 25, wherein the second positive electrode active material comprises an inner core and a shell cladding the inner core,
the inner core comprises LiₐMn_{1-y}B_{y}P_{1-z}C_{z}O₄, where a is selected from the range of 0.9 to 1.1, y is selected from the range of 0.001 to 0.5, z is selected from the range of 0.001 to 0.1, B includes one or more elements selected from Ti, V, Zr, Fe, Ni, Mg, Co, Ga, Sn, Sb, Nb and Ge, and C includes one or more elements selected from B (boron), S, Si and N;
the shell comprises a first cladding layer cladding the inner core, a second cladding layer cladding the first cladding layer, and a third cladding layer cladding the second cladding layer,
the first cladding layer comprises pyrophosphate Li_{f}QP₂O₇ and/or Q_{g}(P₂O₇)ₕ, where 0≤f≤2, 1≤g≤4, and 1≤h≤6, and Q in the pyrophosphate Li_{f}QP₂O₇ and/or Q_{g}(P₂O₇)ₕ each independently includes one or more elements selected from Fe, Ni, Mg, Co, Cu, Zn, Ti, Ag, Zr, Nb and Al;
the second cladding layer comprises crystalline phosphate XPO₄, where X includes one or more elements selected from Li, Fe, Ni, Mg, Co, Cu, Zn, Ti, Ag, Zr, Nb and Al; and
the third cladding layer comprises carbon.

28. The positive electrode active material composition according to any one of claims 19 to 25, wherein the one or more cladding layers in the shell that are farthest from the inner core each independently comprise one or more selected from polysiloxanes, polysaccharides and polysaccharide derivatives.

29. The positive electrode active material composition according to any one of claims 19 to 25, and 28, wherein the polysiloxane comprises a structural unit represented by formula (i), 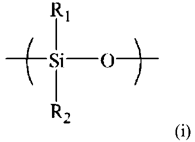
R₁ and R₂ are independently selected from H, -COOH, -OH, -SH, -CN, -SCN, amino, phosphate, carboxylate, amido, aldehyde, sulfonyl, polyether segment, C1-C20 aliphatic hydrocarbon groups, C1-C20 halogenated aliphatic hydrocarbon groups, C1-C20 heteroaliphatic hydrocarbon groups, C1-C20 halogenated heteroaliphatic hydrocarbon groups, C6-C20 aromatic hydrocarbon groups, C6-C20 halogenated aromatic hydrocarbon groups, C2-C20 heteroaromatic hydrocarbon groups and C2-C20 halogenated heteroaromatic hydrocarbon groups;
optionally, R₁ and R₂ are independently selected from H, amino, phosphate, polyether segment, C1-C8 alkyl, C1-C8 haloalkyl, C1-C8 heteroalkyl, C1-C8 haloheteroalkyl, C2-C8 alkenyl and C2-C8 haloalkenyl.

30. The positive electrode active material composition according to any one of claims 19 to 25, and 28 to 29, wherein the polysiloxane further comprises an end-capping group, and the end-capping group includes one or more of the group consisting of the following functional groups: polyether, C1-C8 alkyl, C1-C8 haloalkyl, C1-C8 heteroalkyl, C1-C8 haloheteroalkyl, C2-C8 alkenyl, C2-C8 haloalkenyl, C6-C20 aromatic hydrocarbon group, C1-C8 alkoxy, C2-C8 epoxy, hydroxyl, C1-C8 hydroxyalkyl, amino, C1-C8 aminoalkyl, carboxyl, and C1-C8 carboxylalkyl.

31. The positive electrode active material composition according to any one of claims 19 to 25, and 28 to 30, wherein the polysiloxane includes one or more selected from polydimethylsiloxane, polydiethylsiloxane, polymethylethylsiloxane, polymethylvinylsiloxane, polyphenylmethylsiloxane, polymethylhydrogensiloxane, carboxyl functionalized polysiloxane, epoxy-terminated polysiloxane, methoxy-terminated polydimethylsiloxane, hydroxypropyl-terminated polydimethylsiloxane, polymethylchloropropylsiloxane, hydroxy-terminated polydimethylsiloxane, polymethyltrifluoropropylsiloxane, perfluorooctylmethylpolysiloxane, aminoethylaminopropylpolydimethylsiloxane, polyether-terminated polydimethylsiloxane, aminopropyl-branched polysiloxane, aminopropyl-terminated polydimethylsiloxane, phosphate-branched grafted polydimethylsiloxane, polyether-branched grafted polydimethylsiloxane, 1,3,5,7-octamethylcyclotetrasiloxane, 1,3,5,7-tetrahydro-1,3,5,7-tetramethylcyclotetrasiloxane, cyclopentapolydimethylsiloxane, 2,4,6,8-tetramethylcyclotetrasiloxane, 2,4,6,8-tetramethyl-2,4,6,8-tetravinylcyclotetrasiloxane, cyclic polymethylvinylsiloxane, hexadecamethylcyclooctasiloxane, tetradecamethylcycloheptasiloxane, and cyclic polydimethylsiloxane.

32. The positive electrode active material composition according to any one of claims 19 to 25, and 28 to 31, wherein the number average molecular weights of the polysiloxane, the polysaccharide and the polysaccharide derivative are each independently 300,000 or less, optionally 10,000 to 200,000, more optionally 20,000 to 120,000, and further optionally 400 to 80,000.

33. The positive electrode active material composition according to any one of claims 19 to 25, and 28 to 32, wherein the percentage mass content of the polar functional groups in the polysiloxane is α, 0≤α<50%, optionally, 5%≤α≤30%.

34. The positive electrode active material composition according to any one of claims 19 to 25, and 28 to 33, wherein the substituents attached to the sugar units in the polysaccharide and polysaccharide derivative each independently include one or more of the group consisting of the following functional groups: -OH, -COOH and salts thereof, -R-OH, -SO₃H and salts thereof, -R-OH,-R-SO₃H and salts thereof, sulfate, and alkoxy, where R represents alkylene, optionally C1-C5 alkylene;
optionally, the substituents attached to the sugar units in the polysaccharide and polysaccharide derivatives each independently include one or more of the group consisting of the following functional groups: -OH, -COOH, -COOLi, -COONa, -COOK, -SO₃H, -SO₃Li, -SO₃Na, -SO₃K, -CH₂-SO₃H, -CH₂-SO₃Li, -CH₂-SO₃Na, -CH₂-SO₃K, methoxy, and ethoxy.

35. The positive electrode active material composition according to any one of claims 19 to 25, and 28 to 34, wherein the polysaccharide includes one or more selected from pectin, carboxymethyl starch, hydroxypropyl starch, dextrin, cellulose ether, carboxymethyl chitosan, hydroxyethyl cellulose, carboxymethyl cellulose, carboxypropyl methyl cellulose, guar gum, sesbania gum, gum arabic, lithium alginate, sodium alginate, potassium alginate, fucoidan, agar, carrageenan, carrageenin, xanthan gum and fenugreek gum.

36. The positive electrode active material composition according to any one of claims 19 to 25, and 28 to 35, wherein the percentage mass content of the substituents attached to the sugar units in the polysaccharide and the polysaccharide derivative is each independently 20% to 85%, and optionally 30% to 78%.

37. The positive electrode active material composition according to any one of claims 19 to 36, wherein the lattice mismatch between the material of the inner core and the material of the shell is less than 10%.

38. The positive electrode active material composition according to any one of claims 8 to 39, wherein, based on the total weight of the second positive electrode active material,
the manganese element content is in the range of 10wt% to 35wt%, optionally in the range of 13.3wt% to 33.2wt%, more optionally in the range of 15wt% to 30wt%, and further optionally in the range of 17wt% to 20wt%; and/or,
the phosphorus element content is in the range of 12wt%-25wt%, optionally in the range of 15wt%-20wt%, and more optionally in the range of 16.8wt%-19.5wt%; and/or,
the weight ratio of manganese element to phosphorus element is in the range of 0.71-1.85, optionally 0.90-1.25, and more optionally 0.95-1.20.

39. The positive electrode active material composition according to any one of claims 1 to 18, wherein the surface of the second positive electrode active material is cladded with one or more of carbon and doped carbon; optionally, the surface of the second positive electrode active material is cladded with carbon.

40. The positive electrode active material composition according to claim 39, wherein the doping element in the doped carbon includes one or more selected from nitrogen, phosphorus, sulfur, boron and fluorine.

41. The positive electrode active material composition according to any one of claims 19 to 21, 24 to 25, and 28 to 40, wherein the cladding amount of the shell is 0.1wt% to 6wt% based on the weight of the inner core.

42. The positive electrode active material composition according to any one of claims 19 to 20, and 22 to 38, wherein
the cladding amount of the first cladding layer is greater than 0 and less than or equal to 7wt%, optionally greater than 0 and less than or equal to 6wt%, more optionally greater than 0 and less than or equal to 5.5wt% or 4-5.6wt%, and further optionally greater than 0 and less than or equal to 2wt%, based on the weight of the inner core; and/or
the cladding amount of the second cladding layer is greater than 0 and less than or equal to 6wt%, optionally greater than 0 and less than or equal to 5.5wt%, and more optionally 2-4wt% or 3-5wt%, based on the weight of the inner core; and/or,
the cladding amount of the third cladding layer is greater than 0 and less than or equal to 6wt%, optionally greater than 0 and less than or equal to 5.5wt%, and more optionally greater than 0 and less than or equal to 2wt%, based on the weight of the inner core.

43. The positive electrode active material composition according to any one of claims 19 to 20, 23 to 25, 27 to 38, and 42, wherein the shell further comprises a fourth cladding layer cladding the third cladding layer and a fifth cladding layer cladding the fourth cladding layer; and
the cladding amounts of the fourth cladding layer and the fifth cladding layer are each independently 0.01wt% to 10wt%, optionally 0.05wt% to 10wt%, more optionally 0.1wt% to 5wt%, and further 0.1wt% to 2wt%, based on the weight of the inner core.

44. The positive electrode active material composition according to any one of claims 19 to 43, wherein the shell is located on 40% to 90% of the surface of the inner core, optionally 60% to 80% of the surface.

45. The positive electrode active material composition according to any one of claims 19 to 21, 24 to 25, 28 to 41, and 44, wherein the thickness of the shell is 1-15 nm.

46. The positive electrode active material composition according to any one of claims 19 to 20, 22 to 38, and 42 to 45, wherein the thickness of the first cladding layer is 1-10nm, and optionally 2-10nm; and/or,
the thickness of the second cladding layer is 2-25nm, optionally 2-15nm, and more optionally 3-15nm; and/or,
the thickness of the third cladding layer is 2-25nm, and optionally 5-25nm.

47. The positive electrode active material composition according to any one of claims 19 to 46, wherein
the one or more cladding layers each independently comprise one or more selected from pyrophosphates, phosphates, and oxides, and the one or more selected from pyrophosphates, phosphates, and oxides are crystalline;
optionally, the crystallinities of the pyrophosphate, the phosphate and the oxide are each independently 10% to 100%, and more optionally 50% to 100%.

48. The positive electrode active material composition according to any one of claims 19 to 47, wherein in the shell, the weight ratio of pyrophosphate to phosphate and the weight ratio of pyrophosphate to oxide are each independently 1:3 to 3:1, and optionally 1:3 to 1:1.

49. The positive electrode active material composition according to any one of claims 19 to 48, wherein the one or more cladding layers each independently comprise carbon, and the carbon is a mixture of SP2-form carbon and SP3-form carbon;
optionally, the molar ratio of SP2-form carbon to SP3-form carbon in the carbon is any value within the range of 0.07-13, more optionally any value within the range of 0.1-10, and further optionally any value within the range of 2.0-3.0.

50. The positive electrode active material composition according to any one of claims 19 to 49, wherein
the one or more cladding layers each independently comprise doped carbon, and the mass content of the doping element in the doped carbon is 30% or less; optionally, the mass content of the doping element in the doped carbon is 20% or less.

51. The positive electrode active material composition according to any one of claims 19 to 50, wherein
the one or more cladding layers each independently comprise doped carbon, and in the doped carbon,
the doping element is nitrogen element and/or sulfur element, and the mass content of the doping element in the doped carbon is 1% to 15%; or,
the doping element is phosphorus element, boron element and/or fluorine element, and the mass content of the doping element in the doped carbon is 0.5% to 5%;
optionally, the doping element is nitrogen, phosphorus, sulfur, boron or fluorine.

52. The positive electrode active material composition according to any one of claims 19 to 51, wherein
the one or more cladding layers each independently comprise a pyrophosphate, and the pyrophosphate has an interplanar spacing in the range of 0.293-0.470 nm, optionally 0.297-0.462 nm or 0.293-0.326 nm, and more optionally 0.300-0.310 nm, and a crystal direction (111) angle in the range of 18.00°-32.57°, optionally 18.00°-32.00° or 26.41°-32.57°, more optionally 19.211°-30.846°, and further optionally 29.00°-30.00°; and/or,
the one or more cladding layers each independently comprise a phosphate, and the phosphate has an interplanar spacing in the range of 0.244-0.425 nm, optionally 0.345-0.358 nm, and a crystal direction (111) angle in the range of 20.00°-37.00°, optionally 24.25°-26.45°;
optionally, the first cladding layer or the second cladding layer comprises a phosphate.

53. The positive electrode active material composition according to any one of claims 1 to 52, wherein
the lattice change rate of the second positive electrode active material before and after complete lithium (de)intercalation is 50% or less, optionally 9.8% or less, more optionally 8.1% or less, further optionally 7.5% or less, still further optionally 6% or less, still further optionally 4% or less, still further optionally 3.8% or less, and still further optionally 2.0-3.8%; and/or,
the Li/Mn antisite defect concentration of the second positive electrode active material is 5.3% or less, optionally 5.1% or less, more optionally 4% or less, further optionally 2.2% or less, still further optionally 2% or less, and still further optionally 1.5%-2.2% or 0.5% or less; and/or,
the surface oxygen valence state of the second positive electrode active material is -1.55 or less, optionally -1.82 or less, more optionally -1.88 or less, further optionally -1.90 or less or -1.98 to -1.88, still further optionally -1.98 to -1.89, and still further optionally -1.98 to -1.90.

54. The positive electrode active material composition according to any one of claims 1 to 53, wherein
the powder compacted density P₁ of the first positive electrode active material at 30000N is 3.0 g/cm³ or more, optionally 3.2g/cm³ or more, more optionally 3.3 g/cm³ or more, further optionally 3.4 g/cm³ or more, and still further optionally 3.5 g/cm³ or more; and/or,
the powder compacted density P₂ of the second positive electrode active material at 30000N is 1.89 g/cm³ or more, optionally 1.95g/cm³ or more, more optionally 1.98 g/cm³ or more, further optionally 2.0 g/cm³ or more, still further optionally 2.2 g/cm³ or more, still further optionally 2.2 g/cm³ or more and 2.8 g/cm³ o less, or 2.2 g/cm³ or more and 2.65 g/cm³ or less.

55. The positive electrode active material composition according to any one of claims 1 to 54, wherein the first positive electrode active material comprises one or more of a layered oxide material, a lithium-rich oxide material, a spinel lithium manganese oxide material, and their respective modified compounds, and the modification method includes doping and/or surface cladding modification.

56. The positive electrode active material composition according to claim 55, wherein the first positive electrode active material comprises a compound represented by formula (II),
Liₐ₁A¹_{b1}Ni_{c1}Co_{d1}B¹_{c1}C¹_{f1}O_{2-g1}D¹_{g1} (II)
A¹ includes one or more elements selected from group IA, group IIA, group VIII, group VIB, and group IIB; B¹ includes Mn and/or Al; C¹ includes one or more elements selected from group IA, group IIA, group IIIA, group IVA, VA, group VIA, group IIB, group IIIB, group IVB, group VB, group VIB and group VIII; D¹ includes one or more elements selected from group VIA and group VIIA; al is selected from the range of 0.8 to 1.2; bl is selected from the range of 0 to 0.2; cl is selected from the range of 0 to 1; d1 is selected from the range of 0 to 1; e1 is selected from the range of 0 to 1; f1 is selected from the range of 0 to 0.1; g1 is selected from the range of 0 to 0.1; and c1+d1+e1+f1=1.

57. The positive electrode active material composition according to claim 56, wherein
A¹ includes one or more elements selected from Na, K, Mg, Rb, Zn and Zr; and/or,
C¹ includes one or more elements selected from Al, Mg, Ca, Na, Ti, W, Zr, Sr, Cr, Fe, Zn, Ba, Mo, V, Ce, Nb, Sb, Ta, Ge, Nb, Sc, Ba, B, S and Y, and optionally selected from one or more elements selected from Al, Ti, Zr, Nb, Sr, Sc, Sb, Y, Ba, and B; and/or,
D¹ includes one or more elements selected from N, S, F, Cl and Br, and optionally includes S and/or F; and/or,
a1 is selected from the range of 0.9 to 1.1; and/or,
b1 is selected from the range of 0 to 0.1; and/or,
c1 is selected from the range of 0.314 to 0.990, and optionally selected from the range of 0.500 to 0.990; and/or,
d1 is selected from the range of 0 to 0.320, and optionally selected from the range of 0 to 0.150; and/or,
e1 is selected from the range of 0.001 to 0.450, and optionally selected from the range of 0.005 to 0.4; and/or,
f1 is selected from the range of 0.001 to 0.1, and optionally selected from the range of 0.001 to 0.05; and/or,
g1 is selected from the range of 0 to 0.01, and optionally selected from the range of 0.01 to 0.05.

58. The positive electrode active material composition according to claim 56 or 57, wherein the first positive electrode active material comprises an inner core and a shell cladding the inner core,
the inner core comprises the compound represented by formula (II);
the shell comprises one or more cladding layers; and each cladding layer has ionic conductivity and/or electronic conductivity.

59. The positive electrode active material composition according to claim 58, wherein the one or more cladding layers each independently comprise one or more selected from phosphates, pyrophosphates, carbon, doped carbon, oxides, and fast ion conductors, and optionally one or more selected from phosphates, pyrophosphates, and oxides.

60. The positive electrode active material composition according to claim 58 or 59, wherein
the shell comprises a cladding layer;
optionally, the cladding layer comprises one or more selected from phosphates, pyrophosphates, and oxides.

61. The positive electrode active material composition according to claim 58 or 59, wherein
the shell comprises a first cladding layer cladding the inner core and a second cladding layer cladding the first cladding layer;
optionally, the first cladding layer and the second cladding layer each independently comprise one or more selected from phosphates, pyrophosphates and oxides;
more optionally, the first cladding layer comprises one or more selected from phosphates and oxides, and the second cladding layer comprises one or more selected from pyrophosphates and oxides.

62. The positive electrode active material composition according to any one of claims 58 to 61, wherein
the cladding amount of the shell is 0.005wt% to 1wt%, and optionally 0.01wt% to 0.5wt%, based on the weight of the inner core; and/or,
the thickness of the shell is 2nm to 200nm, and optionally 5nm to 50nm.

63. The positive electrode active material composition according to claim 55, wherein the first positive electrode active material comprises a compound represented by formula (III),
Li₁₊ₚ₁A²_{q1}B²ᵣ₁Oₛ₁ (III)
0.05≤p1<0.2, 0.10<q1≤0.95, 0≤r1≤0.2, and 2≤sl<3, A² includes one or more elements selected from Co, Ni, Mn and Al; and B² includes one or more elements selected from Mg, Ti, Cr, Zr, Nb, Fe, Mo, Cu, Sb, V, P and F.

64. The positive electrode active material composition according to claim 63, wherein the first positive electrode active material comprises an inner core and a shell cladding the inner core,
the inner core comprises the compound represented by formula (III);
the shell comprises one or more cladding layers; and each cladding layer has ionic conductivity and/or electronic conductivity.

65. The positive electrode active material composition according to claim 64, wherein the one or more cladding layers each independently comprise one or more selected from phosphates, pyrophosphates, solid electrolytes, conductive polymers, and materials capable of reversibly (de)intercalating lithium ions.

66. The positive electrode active material composition according to claim 64 or 65, wherein
the cladding amount of the shell is 0.1wt% to 5wt%, and optionally 0.5wt% to 2wt%, based on the weight of the inner core; and/or,
the thickness of the shell is 2nm to 200nm, and optionally 5nm to 50nm.

67. The positive electrode active material composition according to claim 55, wherein the first positive electrode active material comprises a compound represented by formula (IV),
LiMnₜ₁A³₂₋ₜ₁O₄ (IV)
t1 is selected from the range of 0 to 2, and A³ includes one or more elements selected from Ni, Cr, Al, Zr, V, Ti, Mo, Ru, Mg, Nb, Ba, Si, P, W, Co, Cu and Zn.

68. The positive electrode active material composition according to claim 67, wherein the third positive electrode active material comprises an inner core and a shell cladding the inner core,
the inner core comprises the compound represented by formula (IV);
the shell comprises one or more cladding layers; and each cladding layer has ionic conductivity and/or electronic conductivity.

69. The positive electrode active material composition according to claim 68, wherein the one or more cladding layers each independently comprise one or more selected from phosphates, pyrophosphates, solid electrolytes, conductive polymers, and materials capable of reversibly (de)intercalating lithium ions.

70. The positive electrode active material composition according to claim 68 or 69, wherein
the cladding amount of the shell is 0.1wt% to 3wt%, and optionally 0.2wt% to 1.5wt%, based on the weight of the inner core; and/or,
the thickness of the shell is 2nm to 200nm, and optionally 5nm to 50nm.

71. A positive electrode plate, comprising a positive electrode current collector and a positive electrode film layer provided on at least one surface of the positive electrode current collector, wherein the positive electrode film layer comprises the positive electrode active material composition according to any one of claims 1 to 70,
optionally, the content of the positive electrode active material composition in the positive electrode film layer is 90-99.5wt%, and more optionally 95-99.5wt%, based on the total weight of the positive electrode film layer.

72. The positive electrode plate according to claim 71, wherein the positive electrode plate satisfies 0.23≤(h₁×N₁)/(CW/PD/10000)<1, optionally, 0.63≤(h₁×N₁)/(CW/PD/10000)≤0.87, where h₁ represents the average size of the first positive electrode active material particles along the thickness direction of the positive electrode film layer, in µm; N₁ represents the number of first positive electrode active material particles accommodated in the positive electrode film layer along the thickness direction of the positive electrode film layer; CW represents the areal density of the positive electrode film layer, in g/cm²; and PD represents the compacted density of the positive electrode film layer, in g/cm³.

73. The positive electrode plate according to claim 72, wherein
along the thickness direction of the positive electrode film layer, the average size h₁ of the first positive electrode active material particles is 0.5-20µm, and optionally 2.8-9.2µm; and/or,
along the thickness direction of the positive electrode film layer, the number N₁ of the first positive electrode active material particles accommodated in the positive electrode film layer is 5-25, and optionally 6-20; and/or,
the areal density CW of the positive electrode film layer is 0.01-0.05g/cm², optionally 0.015-0.035g/cm²; and/or,
the compacted density PD of the positive electrode film layer is 1.8-3.6g/cm³, optionally 2.0-3.4g/cm³.

74. The positive electrode plate according to claim 72 or 73, wherein the positive electrode plate further satisfies 0.5≤α₁+(PD/p₁)≤1.5, where α₁ represents the porosity of the positive electrode film layer,
optionally, the porosity α₁ of the positive electrode film layer is 0.28-0.50, and optionally 0.30-0.39.

75. The positive electrode plate according to any one of claims 72 to 74, wherein based on the total mass of the positive electrode active material composition, the mass proportion of the first positive electrode active material is denoted as W₁, the mass proportion of the second positive electrode active material is denoted as W₂, the powder compacted density of the first positive electrode active material at 30000N is denoted as P₁, and the powder compacted density of the second positive electrode active material at 30000N is denoted as P₂, both in g/cm³, then PD/[(P₁×W₁)+(P₂×W₂)] is 89% or more, and optionally 92% or more.

76. A battery, comprising the positive electrode active material composition according to any one of claims 1 to 70 or the positive electrode plate according to any one of claims 71 to 75.

77. An electrical apparatus, comprising the battery according to claim 76.
